# EUROPEAN PATENT SPECIFICATION

(11) **EP 2 958 266 B1**
(45) Date of publication and mention of the grant of the patent: **07.06.2017**
(21) Application number: 13876869.2
(22) Date of filing: 05.03.2013
(51) Int. Cl.: H04L 12/801, H04W 4/20, H04W 28/18, H04W 76/00

(54) **SERVICE INTERRUPTION PROCESSING METHOD AND DEVICE THEREOF**
DIENSTUNTERBRECHUNGSVERARBEITUNGSVERFAHREN UND VORRICHTUNG DAFÜR
PROCÉDÉ DE TRAITEMENT D'INTERRUPTION DE SERVICE ET DISPOSITIF ASSOCIÉ

(43) Date of publication of application: 23.12.2015
(73) Proprietor: Huawei Technologies Co., Ltd., Longgang District Shenzhen, Guangdong 518129 (CN)
(72) Inventor: LI, Ming, Shenzhen Guangdong 518129 (CN); YANG, Chunjie, Shenzhen Guangdong 518129 (CN); SHAO, Wanting, Shenzhen Guangdong 518129 (CN)
(74) Representative: Thun, Clemens
(86) International application number: PCT/CN2013/072201
(87) International publication number: WO 2014/134789

(56) References cited:
- WO-A2-2009/105207
- CN-A- 101 111 055
- CN-A- 101 409 903
- CN-A- 101 953 200
- US-A1- 2013 054 858

## Description

### TECHNICAL FIELD

The present invention relates to the field of communication technologies, and in particular, to a method for handling service interruption and a related apparatus.

### BACKGROUND

With the development of communication technologies, a real-time service such as a voice call service and a video service, because of its convenient and real-time performance, have become an indispensable communication means in people's daily lives. However, when a real-time service is in progress, a case is inevitable where an ongoing real-time service of a user equipment needs to be interrupted because of a device limit, a quality limit, a device fault, or another reason, including a transmission device limit in wired or wireless communication and quality degradation of a radio channel in wireless communication, which reduces subjective perception and use experience of a user.

In a current Global System for Mobile Communications (Global System for Mobile, GSM) communication system, a voice call service is interrupted mainly because of handover, where handover is classified into two main types depending a triggering factor: one type is handover based on a quality factor, for example, a user equipment is handed over from a bad-quality cell to a high-quality cell; and the other type is handover based on a capacity factor, for example, a user equipment is handed over from a full-rate channel to a half-rate channel for more user equipments to be connected.

In a GSM system of a 2nd generation mobile communication technology (2nd Generation, 2G), all existing handover manners are hard handover. That is, in a handover process, a user equipment is disconnected from a radio link of an original cell first, and then a connection may be established on a radio link of a new cell for a call to continue. In the handover process, voice data is lost inevitably; moreover, signaling interaction between the user equipment and a base station also needs to occupy a transmission bandwidth of the voice data, which also results in loss of voice data. If voice data generated in a process where a user is in a voice call is lost, obvious interruption is caused in subjective listening perception of the user in the call, and mean opinion score (Mean Opinion Score, MOS) decreases.

CN 101 409 903 A discloses a method for improving soft handover interruption time delay based on control flux. Before the soft handover interruption, when a current service plot processes a signaling sent by an RNC, a time interval before an effective time of the soft handover takes effect is obtained. The flux of data sent by the RNC is matched and controlled from the current time to the time when the soft handover takes effect. A channel is switched to a target plot after the soft handover takes effect; and the data is sent from the target plot.

Further, US 2013/054858 A1 discloses a method for issuing interrupts. The method includes a receiving communication adapter receiving a first remote directed memory access (RDMA) write with immediate, identifying a completion queue descriptor corresponding to the first RDMA write with immediate and to a receiving entity, incrementing an interrupt counter in response to the first RDMA write with immediate. The method further includes storing, by the receiving communication adapter, in response to determining that the interrupt counter value is less than the interrupt threshold value, data in the first RDMA write with immediate on the receiving device without triggering an interrupt to the receiving entity. The receiving communication adapter further receives a second RDMA write with immediate, and increments the interrupt counter value corresponding to the completion queue descriptor in response to the second RDMA write with immediate. Finally, the interrupt to the receiving entity is triggered in response to the interrupt counter value exceeding the interrupt threshold value.

A method for supporting handoffs of a first mobile unit in a wireless communication system that supports multiple vocoder technologies is disclosed in WO 2009/105207 A2. The method includes allocating, prior to completion of a handoff of the first mobile unit, a transcoder function to the first mobile unit. The method also includes detecting a change in a format of at least one packet received from the first mobile unit. The change indicates that the vocoder technology used by the first mobile unit to form packets has changed. The packets are then transcoded in response to detecting the change in the format.

Finally, CN 101 111 055 A discloses a method for implementing a controlling switch which is used for a switching process in a long-term evolution system or the switching process between the long-term evolution system and other systems. A terminal enters the switching process after completing to receive and send the final data in a source small zone, or the terminal enters the period of the switching process after receiving the switched signaling to be indicated. The terminal starts to implement the receiving or the sending operation in the small target zone within a preset interrupt time.

### SUMMARY

Embodiments of the present invention provides a method for handling service interruption and a related apparatus, which may reduce an adverse impact of an interruption process on quality of a real-time service.

In a first aspect, an embodiment of the present invention provides a method for handling service interruption, including:
sending, by a detecting end, a first control instruction to an interruption-performing end when data frame transmission of an ongoing real-time service of a user equipment needs to be interrupted and if the detecting end detects that a data frame level of a data frame of the real-time service satisfies a preset interruption-delaying condition, so that the interruption-performing end, upon receiving the first control instruction, delays interrupting the data frame transmission of the real-time service; and
sending, by the detecting end, a second control instruction to the interruption-performing end in a process of continuing to transmit the data frame of the real-time service and if the detecting end detects that the data frame level of the data frame of the real-time service satisfies a preset interruption-triggering condition, so that the interruption-performing end, upon receiving the second control instruction, interrupts the real-time service.

With reference to the first aspect, in a first possible implementation manner, the data frame level of the data frame of the real-time service is classified at least into a first level and a second level; and whether the preset interruption-delaying condition is satisfied is determined according to whether the data frame level of the data frame of the real-time service is the first level or the second level.

With reference to the first possible implementation manner of the first aspect, in a second possible implementation manner, the sending, by the detecting end, the first control instruction to the interruption-performing end when the data frame transmission of the ongoing real-time service of the user equipment needs to be interrupted and if the detecting end detects that the data frame level of the data frame of the real-time service satisfies the preset interruption-delaying condition includes:
detecting, by the detecting end in real time, the data frame level of the data frame of the ongoing real-time service of the user equipment; and
when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, sending, by the detecting end, the first control instruction to an interruption-performing end.

With reference to the first possible implementation manner of the first aspect, in a third possible implementation manner, the sending, by the detecting end, the first control instruction to the interruption-performing end when the data frame transmission of the ongoing real-time service of the user equipment needs to be interrupted and if the detecting end detects that the data frame level of the data frame of the real-time service satisfies the preset interruption-delaying condition includes:
detecting, by the detecting end when the data frame transmission of the ongoing real-time service of the user equipment needs to be interrupted, a data frame level of a data frame transmitted by the ongoing real-time service of the user equipment; and
if the data frame level of the data frame transmitted by the ongoing real-time service is the preset first level, hence the preset interruption-delaying condition is satisfied, sending, by the detecting end, the first control instruction to the interruption-performing end.

With reference to the first possible implementation manner of the first aspect, or the second possible implementation manner of the first aspect, or the third possible implementation manner of the first aspect, in a fourth possible implementation manner, before the sending, by the detecting end, the second control instruction to the interruption-performing end, the method further includes a step of presetting a duration threshold; where
the sending, by the detecting end, the second control instruction to the interruption-performing end in the process of continuing to transmit the data frame of the real-time service and if the detecting end detects that the data frame level of the data frame of the real-time service satisfies the preset interruption-triggering condition includes:
when the detecting end detects that duration for continuing to transmit the data frame of the real-time service reaches the preset duration threshold, hence the interruption-triggering condition is satisfied, sending, by the detecting end, the second control instruction to the interruption-performing end.

In a second aspect, an embodiment of the present invention further provides another method for handling service interruption, including:
receiving, by an interruption-performing end, a first control instruction or a second control instruction sent by a detecting end, where
the first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition; and
the second control instruction is sent by the detecting end to the interruption-performing end in a process of continuing to transmit the data frame of the real-time service and after the detecting end detects that the data frame level of the data frame of the real-time service satisfies a preset interruption-triggering condition;
delaying, by the interruption-performing end upon receiving the first control instruction, interrupting the real-time service; and
interrupting, by the interruption-performing end upon receiving the second control instruction, the ongoing real-time service of the user equipment.

With reference to the second aspect, in a first possible implementation manner, the delaying, by the interruption-performing end upon receiving the first control instruction, interrupting the real-time service includes: sending, by the interruption-performing end upon receiving the first control instruction, a delay-interrupt command to a base station BTS, so that the base station BTS delays interrupting the ongoing real-time service of the user equipment served by the base station BTS; and
the interrupting, by the interruption-performing end upon receiving the second control instruction, the ongoing real-time service of the user equipment includes: sending, by the interruption-performing end upon receiving the second control instruction, an interrupt instruction to the base station BTS, so that the base station BTS interrupts the ongoing real-time service of the user equipment served by the base station BTS.

In a third aspect, an embodiment of the present invention further provides a detecting end for service interruption, including:
a handling module, configured to send a first control instruction to an interruption-performing end when data frame transmission of an ongoing real-time service of a user equipment needs to be interrupted and if it is detected that a data frame level of a data frame of the real-time service satisfies a preset interruption-delaying condition, so that the interruption-performing end, upon receiving the first control instruction, delays interrupting the real-time service; and
an interrupting module, configured to send a second control instruction to the interruption-performing end in a process of continuing to transmit the data frame of the real-time service and if it is detected that the data frame level of the data frame of the real-time service satisfies a preset interruption-triggering condition, so that the interruption-performing end, upon receiving the second control instruction, interrupts the real-time service.

With reference to the third aspect, in a first possible implementation manner, the data frame level of the data frame of the real-time service is classified at least into a first level and a second level; and whether the preset interruption-delaying condition is satisfied is determined according to whether the data frame level of the data frame of the real-time service is the first level or the second level.

With reference to the first possible implementation manner of the third aspect, in a second possible implementation manner, the handling module includes:
a detecting unit, configured to detect, in real time, the data frame level of the data frame of the ongoing real-time service of the user equipment;
a first determining unit, configured to determine whether the ongoing real-time service of the user equipment needs to be interrupted; and
a first handling unit, configured to send, when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, the first control instruction to the interruption-performing end.

With reference to the first possible implementation manner of the third aspect, in a third possible implementation manner, the handling module includes:
a second determining unit, configured to determine whether the ongoing real-time service of the user equipment needs to be interrupted;
an identifying unit, configured to detect, when the data frame transmission of the ongoing real-time service of the user equipment needs to be interrupted, a data frame level of a data frame transmitted by the ongoing real-time service of the user equipment; and
a second handling unit, configured to send, if the data frame level of the data frame transmitted by the ongoing real-time service is the preset first level, hence the preset interruption-delaying condition is satisfied, the first control instruction to the interruption-performing end.

With reference to the third aspect, or the first possible implementation manner of the third aspect, or the second possible implementation manner of the third aspect, or the third possible implementation manner of the third aspect, in a fourth possible implementation manner, the detecting end further includes:
a first presetting module, configured to store a preset duration threshold; where the interrupting module is specifically configured to send, when it is detected that duration for continuing to transmit the data frame of the real-time service reaches the preset duration threshold, hence the interruption-triggering condition is satisfied, the second control instruction to the interruption-performing end.

In a fourth aspect, an embodiment of the present invention further provides another interruption-performing end for service interruption, including:
a receiving module, configured to receive a first control instruction or a second control instruction sent by a detecting end;
where the first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition; and
the second control instruction is sent by the detecting end to the interruption-performing end in a process of continuing to transmit the data frame of the real-time service and after the detecting end detects that the data frame level of the data frame of the real-time service satisfies a preset interruption-triggering condition; and
a handling module, configured to, upon receiving the first control instruction, delay interrupting the real-time service; and upon receiving the second control instruction, interrupt the ongoing real-time service of the user equipment.

With reference to the fourth aspect, in a first possible implementation manner, the handling module is specifically configured to, upon receiving the first control instruction, send a delay-interrupt command to a base station BTS, so that the base station BTS delays interrupting the ongoing real-time service of the user equipment served by the base station BTS; and
upon receiving the second control instruction, send an interrupt instruction to the base station BTS, so that the base station BTS interrupts the ongoing real-time service of the user equipment served by the base station BTS.

With reference to the fourth aspect, or the first possible implementation manner of the fourth aspect, in a second possible implementation manner, the interruption-performing end may be a base station or a base station controller, and the detecting end may be a base station BTS or a base station controller BSC.

Implementing embodiments of the present invention have the following benefits:

In the embodiments of the present invention, a current data frame of a real-time service that needs to be interrupted is identified, so as to delay interrupting the data frame transmission of the ongoing real-time service of a user equipment when the real-time service needs to be interrupted but the current data frame of the real-time service is an important data frame, and interruption time is selected again, so that an interrupt process occurs at a position of an unimportant data frame, thereby reducing, as much as possible, an adverse impact of the interrupt process on real-time service quality.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for handling service interruption according to an embodiment of the present invention;
FIG. 2 is a schematic flowchart of another method for handling service interruption according to an embodiment of the present invention;
FIG. 3 is a schematic flowchart of another method for handling service interruption according to an embodiment of the present invention;
FIG. 4 is a schematic flowchart of another method for handling service interruption according to an embodiment of the present invention;
FIG. 5 is one schematic flowchart of a method for handling interruption when continuing to transmit a data frame of a real-time service according to an embodiment of the present invention;
FIG. 6 is another schematic flowchart of a method for handling interruption when continuing to transmit a data frame of a real-time service according to an embodiment of the present invention;
FIG. 7 is one schematic flowchart of a method for handling interruption when continuing to transmit a data frame of a real-time service according to an embodiment of the present invention;
FIG. 8 is a schematic flowchart of a method for determining a data frame level of a voice call service according to an embodiment of the present invention;
FIG. 9 is a schematic flowchart of another method for handling service interruption according to an embodiment of the present invention;
FIG. 10 is a schematic structural diagram of a detecting end for service interruption according to an embodiment of the present invention;
FIG. 11 is a specific schematic structural diagram of a handling module in an apparatus for handling service interruption illustrated in FIG. 10;
FIG. 12 is another specific schematic structural diagram of a handling module in an apparatus for handling service interruption illustrated in FIG. 10;
FIG. 13 is a schematic structural diagram of another apparatus for handling service interruption according to an embodiment of the present invention;
FIG. 14 is a schematic structural diagram of an interruption-performing end for service interruption according to an embodiment of the present invention;
FIG. 15 is a schematic structural diagram of a network device according to an embodiment of the present invention; and
FIG. 16 is a schematic structural diagram of another network device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

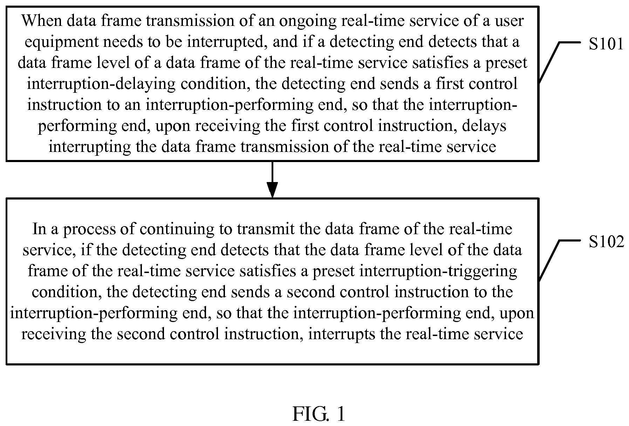

Refer to FIG. 1 which is a schematic flowchart of a method for handling service interruption according to an embodiment of the present invention. A real-time service in the embodiment of the present invention mainly includes a service that has a high requirement on timeliness of information transmission and is sensitive to a delay and jitter in information transmission, which mainly includes but is not limited to a service such as a voice call, video on demand (Video On Demand, VOD), Voice over Internet Protocol (Voice Over Internet Protocol, VOIP), and distance learning. Specifically, the method includes the following:

S101: When data frame transmission of an ongoing real-time service of a user equipment needs to be interrupted, and if a detecting end detects that a data frame level of a data frame of the real-time service satisfies a preset interruption-delaying condition, the detecting end sends a first control instruction to an interruption-performing end, so that the interruption-performing end, upon receiving the first control instruction, delays interrupting the data frame transmission of the real-time service.

The first control instruction is an instruction for instructing the interruption-performing end to delay interrupting the data frame transmission of the real-time service.

In the S101, a reason for interrupting the real-time service may include but is not limited to the following cases: a service needs to be handed over to another device having higher quality because of a quality limit of a current serving device; or an ongoing service needs to be handed over to another device for continuing because of a reason such as overall service distribution and arrangement; or an ongoing real-time service needs to be handed over to another device that can provide a normal service because a fault occurs on a device.

Whether an interrupt operation needs to be performed on the real-time service may be determined according to a case described above. The data frame level of the data frame of the real-time service may be determined according to a characteristic, such as strength of the data frame of the real-time service. The data frame level may be set as a high-level first level and a low-level second level according to requirements, and whether the data frame level of the data frame of the real-time service satisfies the preset interruption-delaying condition is determined according to whether the data frame level is the first level or the second level.

If the data frame level of the data frame of the real-time service is the first level, the interruption-delaying condition is satisfied and interruption needs to be delayed; therefore, the first control instruction is sent to the interruption-performing end, so as to continue to transmit the data frame of the real-time service until the data frame of the real-time service satisfies the preset interruption-triggering condition when an interrupt operation is performed.

If the data frame level of the data frame of the real-time service is the second level, the interrupt operation may be directly performed.

Specifically, for example, in the S101, if a user is currently in a call, when a high-energy human voice is determined according to a parameter such as amplitude and a frequency of a voice data frame, obviously, the data frame is an important data frame, and the call of the user will be interrupted if interruption is performed. If the voice data frame is a low-energy non-human sound, the data frame may be basically determined to be unimportant, and interruption may be directly initiated so as to hand over the real-time service to another device. In such a case, the interruption does not affect the voice call of the user.

Further, an interruption-related priority may be set according to a reason for initiating interruption. If a level of an interrupt that needs to interrupt the ongoing real-time service of the user equipment is a preset high-priority interrupt, for example, a high-priority interrupt where interruption needs to be performed because a device that currently bears the real-time service cannot perform effective communication because a fault occurs, the interrupt operation may also be directly performed. If the interrupt is not a high-priority interrupt, the S101 is performed.

S102: In a process of continuing to transmit the data frame of the real-time service, if the detecting end detects that the data frame level of the data frame of the real-time service satisfies a preset interruption-triggering condition, the detecting end sends a second control instruction to the interruption-performing end, so that the interruption-performing end, upon receiving the second control instruction, interrupts the real-time service.

Specifically, the satisfying the interruption-triggering condition in the S102 includes the following: when duration for continuing to transmit the data frame of the real-time service reaches a preset duration threshold, for example, a timer that starts timing at the beginning of delaying the interruption ends the timing, the interruption-triggering condition is satisfied; in such a case, the second control instruction needs to be sent to the interruption-performing end;
alternatively, when it is detected that at least one data frame whose level is the second level appears among the data frame of the real-time service that is transmitted continuously, the interruption-triggering condition is satisfied, and the second control instruction needs to be sent to the interruption-performing end; and
alternatively, it is determined whether duration for continuing to transmit the data frame of the real-time service reaches a preset duration threshold; if the duration threshold is not reached, it is further determined whether at least one data frame whose level is the preset second level appears in the process of continuing to transmit the data frame of the real-time service; and if at least one data frame whose level is the preset second level, the interruption-triggering condition is satisfied; in such a case, the second control instruction needs to be sent to the interruption-performing end.

Whether the duration for continuing to transmit the data frame reaches the preset duration threshold may be determined according to timing of a timer. A method for determining a data frame level of a voice call data frame may be a manner such as making determination according to an amount of energy. The corresponding first level and second level may also be set according to the amount of energy, where a data frame is at the first level if energy thereof is greater than an energy value; otherwise, it is at the second level.

It should be noted that in the whole process described, the detecting end and the interruption-performing end may both be set on a base station (Base Transceiver Station, BTS) and performs the steps of determining the level of the data frame of the real-time service, delaying the interruption, and performing the interrupt operation. In another embodiment, the detecting end and the interruption-performing end may both be set on a base station controller (Base Station Controller, BSC) and performs the steps of determining the level of the data frame of the real-time service, delaying the interruption, and performing the interrupt operation; alternatively, the detecting end is set on the BSC and performs a step of determining the level of the data frame of the real-time service, and the interruption-performing end is set on the BTS and performs the step of delaying the interruption and performing the interrupt operation; alternatively, the detecting end is set on the BTS and performs the step of determining the level of the data frame of the real-time service, and the interruption-performing end is set on the base station controller, where after the BTS and the BSC exchange information so that the BSC receives a first control command or a second control command sent by the BTS, the BSC performs the step of delaying the interruption and performing the interrupt operation in a manner of sending a delay-interrupt command or an interrupt command to the BTS.

In the embodiment of the present invention, importance of a data frame of a real-time service that needs to be interrupted is identified, so as to delay interrupting the data frame transmission of the real-time service when the real-time service needs to be interrupted but the data frame transmitted by the real-time service is an important data frame, and interruption time is selected again, so that an interrupt process occurs at a position of an unimportant data frame, thereby reducing, as much as possible, an adverse impact of the interrupt process on real-time service quality.

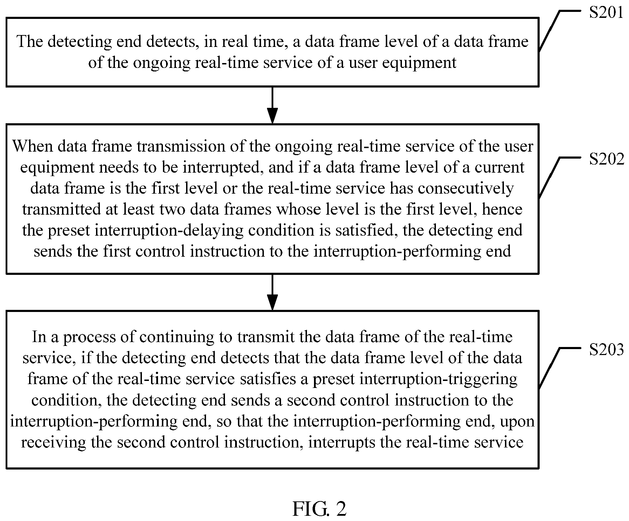

Refer to FIG. 2 which is a schematic flowchart of another method for handling service interruption according to an embodiment of the present invention. The method for handling interruption according to the embodiment of the present invention is applicable to a real-time service such as voice call or video on demand, and is used to determine interruption time for performing interrupt processing on these real-time services. Firstly, in the embodiment of the present invention, a data frame level of a data frame of the real-time service is at least classified into a first level and a second level. Whether the preset interruption-delaying condition is satisfied is determined according to whether the data frame level of the data frame of the real-time service is the first level or the second level. Specifically, the method according to the embodiment of the present invention includes the following:

Optionally, S201: The detecting end detects, in real time, a data frame level of a data frame of the ongoing real-time service of a user equipment.

In the S201, the detecting end may detect, in real time, a real-time service such as a voice call performed by the user equipment, so as to accurately determining the data frame level in a timely manner when the real-time service needs to be interrupted, which may include detecting, in real time, a frame level of a current data frame of the real-time service, so as to determine, according to the current data frame, whether to delay the interruption; or include detecting, in real time, a frame level of a current data frame of the real-time service, and recording a data frame level that has been processed, so as to obtain data frame level of two or more consecutive frames including the current data frame, and then determine, according to the frame level of the two or more consecutive frames including the current data frame, whether to delay the interruption.

A frame level of a data frame of a real-time service such as a voice call service may be determined according to an amount of energy of the data frame and/or whether it is a voice produced by a user, where whether it is a voice produced by a user may be determined according to a frequency of the data frame. For example, a data frame level may be classified into an important first level, a common second level, and the like according to whether the data frame is a high-energy human voice, a low-energy human voice, a high-energy non-human sound, and a low-energy non-human sound.

S202: When the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, the detecting end sends a first control instruction to an interruption-performing end.

That is, if a level of the current data frame is the preset first level or a level of at least two consecutive data frames including the current data frame is the first level, the preset interruption-delaying condition is satisfied, and the first control instruction is sent to the interruption-performing end to delay interruption, so that the data frame transmission of the real-time service is continued.

A reason for interrupting a real-time service may include the following cases: a service needs to be handed over to another device having higher quality because of a quality limit of a current serving device; or an ongoing service needs to be handed over to another device for continuing because of a reason such as overall service distribution and arrangement; or an ongoing real-time service needs to be handed over to another device that can provide a normal service because a fault occurs on a device.

When a data frame level of a data frame is detected, together with a data frame level of a data frame that has been processed and neighboring the current data frame, it may be determined accurately whether the data frame of the real-time service is an important data frame corresponding to an ongoing call of a use when interruption needs to be performed.

The detecting end keeps detecting a level of a data frame of a real-time service in the S201, and may determine, when the data frame transmission of the real-time service needs to be interrupted and directly according to a detecting result, whether to delay the interruption or directly performing the interrupt operation. The detecting end and/or the interruption-performing end according to the embodiment of the present invention may be set on a BTS, and indeed, may also be set on a BSC, or be respectively set on a BTS and a BSC to perform a corresponding step. The embodiment of the present invention is described by using implementation where the detecting end and the interruption-performing end are both set on a BTS. Indeed, in another embodiment, the method for handling service interruption may also be implemented in another network device having the same or similar functions as that of the BTS, where the present invention sets no limit thereto.

Specifically, a process for determining whether to interrupt the ongoing real-time service of the user equipment is as follows: Regarding a voice call service, when a user is in a call with another user by using a user equipment thereof, in order to ensure continuity and call quality for the voice call, interrupt processing needs to be performed on the voice call service, so that the call service is handed over from a bad-quality cell to be borne by a high-quality cell. Firstly, the user equipment and a BTS measures and acquires radio channel quality respectively, and a measurement report is obtained by the user equipment by measuring a change in quality of a signal transmitted by the BTS and reached the user equipment through a channel, and by the BTS by measuring a change in quality of a signal in the opposite direction; then, the user equipment and the BTS report the measurement reports to a BSC within each preset period, such as 480 ms; the BSC processes the measurement reports to determine, according to a processing result and a preset handover algorithm, whether handover needs to be triggered at a current moment, that is, determine whether the voice call service of the user equipment needs to be interrupted, and if yes, notify the BTS of determination and processing of whether interruption is performed immediately.

When the BSC determines by using the handover algorithm to generate a handover command (for interrupting the voice call service of the user equipment) and deliver the handover command to the BTS, the BTS determines that the ongoing voice call service of the user equipment needs to be interrupted.

When detecting that the real-time service needs to be interrupted, the BTS performs the following steps:

The BTS transmits a first control instruction and a second control instruction by using the detecting end and the interruption-performing end therein, so as to complete interruption delaying and an interrupt operation. In S201, the data frame level of the ongoing voice call service of the user equipment is detected in real time. If the BTS determines that the data frame level of the current data frame of the voice call service is the first level, or that the real-time service has consecutively transmitted at least two data frames whose level is the first level, the real-time service is in a phase of important voice data frames currently. In such a case, the BTS needs to delay the handover command sent by the BSC, that is, does not interrupt the data frame transmission of the ongoing real-time service of the user equipment. The BTS may start a handover-delaying timer to start timing, and continue to transmit voice data of the voice call service in a timing process of the timer.

When the ongoing voice call service of the user equipment needs to be interrupted, if the BTS determines that a level of a voice data frame of the current voice call service is the second level, or that the real-time service has consecutively transmitted at least two data frames whose level is the second level, the real-time service is in a phase of unimportant voice data frames currently, and may be interrupted; therefore, a handover procedure is initiated to the user equipment for the user equipment to complete handover.

S203: In a process of continuing to transmit the data frame of the real-time service, if the detecting end detects that the data frame level of the data frame of the real-time service satisfies a preset interruption-triggering condition, the detecting end sends a second control instruction to the interruption-performing end, so that the interruption-performing end, upon receiving the second control instruction, interrupts the real-time service.

Specifically, the satisfying the interruption-triggering condition in the S203 includes: when duration for continuing to transmit the data frame of the real-time service reaches the preset duration threshold, the interruption-triggering condition is satisfied, hence the second control instruction needs to be sent to the interruption-performing end;
alternatively, when the detecting end detects that at least one data frame whose level is the second level appears among the data frame of the real-time service that is transmitted continuously, the interruption-triggering condition is satisfied, hence the second control instruction needs to be sent to the interruption-performing end;
alternatively, determine whether duration for continuing to transmit the data frame of the real-time service reaches the preset duration threshold; and if the duration threshold is not reached, further determining whether at least one data frame whose level is the second level appears in a process of continuing to transmit the data frame of the real-time service; and if at least one data frame whose level is the second level appears, the interruption-triggering condition is satisfied, hence the second control instruction needs to be sent to the interruption-performing end.

The BTS may determine, according to the timing of the timer, whether the duration for continuing to transmit the voice data reaches a preset duration threshold. In the process of continuing to transmit the voice call service, a method for the BTS to determine a data frame level of the voice call service is also performing identifying according to a characteristic such as energy of a data frame.

In the embodiment of the present invention, a data frame of a real-time service that needs to be interrupted is identified, so as to delay interrupting the real-time service when the real-time service needs to be interrupted but a current frame of the real-time service is an important data frame, and interruption time is selected again, so that an interrupt process occurs at a position of an unimportant data frame, thereby reducing, as much as possible, an adverse impact of the interrupt process on real-time service quality.

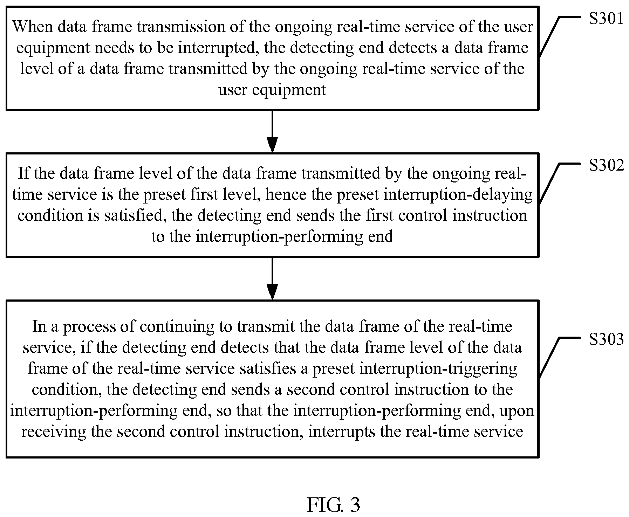

Then, refer to FIG. 3 which is a schematic flowchart of another method for handling real-time service interruption according to an embodiment of the present invention. A difference from the embodiment corresponding to FIG. 2 lies in that in the embodiment of the present invention, a service interruption process is triggered when determining that an ongoing real-time service of a user equipment needs to be interrupted, instead of detecting, in real time, a data frame level of the ongoing real-time service of the user equipment. Specifically, the method according to the embodiment includes the following:

S301: When data frame transmission of the ongoing real-time service of the user equipment needs to be interrupted, the detecting end detects a data frame level of a data frame transmitted by the ongoing real-time service of the user equipment.

A data frame level of a data frame of a real-time service such as a voice call service may be determined according to an amount of energy of the data frame and/or whether it is a voice produced by a user, where whether it is a voice produced by a user may be determined according to a frequency of the data frame. For example, a data frame level may be classified into an important first level, a common second level, and the like according to whether the data frame is a high-energy human voice, a low-energy human voice, a high-energy non-human sound, and a low-energy non-human sound.

A reason for interrupting a real-time service may include the following cases: a service needs to be handed over to another device having higher quality because of a quality limit of a current serving device; or an ongoing service needs to be handed over to another device for continuing because of a reason such as overall service distribution and arrangement; or an ongoing real-time service needs to be handed over to another device that can provide a normal service because a fault occurs on a device.

Whether an interrupt operation is to be performed on the real-time service may be determined according to a case described above.

S302: If the data frame level of the data frame transmitted by the ongoing real-time service is the preset first level, hence the preset interruption-delaying condition is satisfied, the detecting end sends the first control instruction to the interruption-performing end.

S303: In a process of continuing to transmit the data frame of the real-time service, if the detecting end detects that the data frame level of the data frame of the real-time service satisfies a preset interruption-triggering condition, the detecting end sends a second control instruction to the interruption-performing end, so that the interruption-performing end, upon receiving the second control instruction, interrupts the real-time service.

Specifically, the satisfying the interruption-triggering condition in the S303 includes: when duration for continuing to transmit the data frame of the real-time service reaches the preset duration threshold, the interruption-triggering condition is satisfied, hence the second control instruction needs to be sent to the interruption-performing end;
or include: when detecting that at least one data frame whose level is the second level appears among the data frame of the real-time service that is transmitted continuously, hence the interruption-triggering condition is satisfied, the second control instruction needs to be sent to the interruption-performing end;
or include: determining whether duration for continuing to transmit the data frame of the real-time service reaches the preset duration threshold; and if the duration threshold is not reached, further determining whether at least one data frame whose level is the second level appears in a process of continuing to transmit the data frame of the real-time service; and if at least one data frame whose level is the second level appears, the interruption-triggering condition is satisfied, hence the second control instruction needs to be sent to the interruption-performing end.

The detecting end and/or the interruption-performing end according to the embodiment of the present invention may be set on a BTS to implement a corresponding function, and indeed, may also be set on a BSC to implement a corresponding function, or be respectively set on a BTS and a BSC to implement a corresponding function. The embodiment of the present invention is described by using implementation where the detecting end and the interruption-performing end are on a BTS. Indeed, in another embodiment, the method for handling service interruption may also be implemented in another network device having the same or similar functions as those of the BTS, where the present invention sets no limit thereto.

Specifically, a process for determining whether to interrupt the ongoing real-time service of the user equipment is as follows: When a user is in a call with another user by using a user equipment thereof, in order to ensure continuity and call quality for the voice call, interrupt processing needs to be performed on the voice call service, so that the call service is handed over from a bad-quality cell to be borne by a high-quality cell. Firstly, the user equipment and a BTS measures and acquires radio channel quality respectively, and a measurement report is obtained by the user equipment by measuring a change in quality of a signal transmitted by the BTS and reached the user equipment through a channel, and by the BTS by measuring a change in quality of a signal in the opposite direction; then, the user equipment and the BTS report the measurement reports to a BSC within each preset period, such as 480 ms; the BSC processes the measurement reports to determine, according to a processing result and a preset handover algorithm, whether handover needs to be triggered at a current moment, that is, determine whether the voice call service of the user equipment needs to be interrupted, and if yes, notify the BTS of determination and processing of whether interruption is performed immediately.

The BSC determines by using the handover algorithm to generate a handover command (a command for interrupting the voice call service of the user equipment) and delivers the handover command to the BTS; the BTS, when receiving the handover command, determines that the ongoing voice call service of the user equipment needs to be interrupted, and the BTS identifies a level of a current voice data frame of voice data of the voice call service. In the embodiment of the present invention, the BTS can a data frame level of the voice call service only when receiving the handover command delivered by the BSC.

When detecting that the real-time service needs to be interrupted, the BTS performs the following steps:

The BTS transmits a first control instruction and a second control instruction by using the detecting end and the interruption-performing end therein, so as to complete interruption delaying and an interrupt operation. In S302, the BTS detects and identifies that the level of the current voice data frame of the voice call service is the first level, indicating that the real-time service is in a phase of import voice data frames currently. In such a case, the BTS needs to delay interruption to continue to transmit the data frame of the ongoing real-time service of the user equipment. The BTS may start a timer to start timing, and continue to transmit voice data of the voice call service in a timing process.

If the BTS identifies that a level of a current voice data frame of voice data of the voice call service is the second level, indicating that the real-time service is in a phase of unimportant voice data frames currently, the BTS may interrupt the data frame transmission of the ongoing real-time service of the user equipment, and sends the handover command to the user equipment for the user equipment to complete handover.

In the embodiment of the present invention, a level of a current data frame of a real-time service that needs to be interrupted is identified, so as to delay interrupting the data frame transmission of the real-time service when the real-time service needs to be interrupted but the current data frame of the real-time service is an important data frame, and interruption time is selected again, so that an interrupt process occurs at a position of an unimportant data frame, thereby reducing, as much as possible, an adverse impact of the interrupt process on real-time service quality.

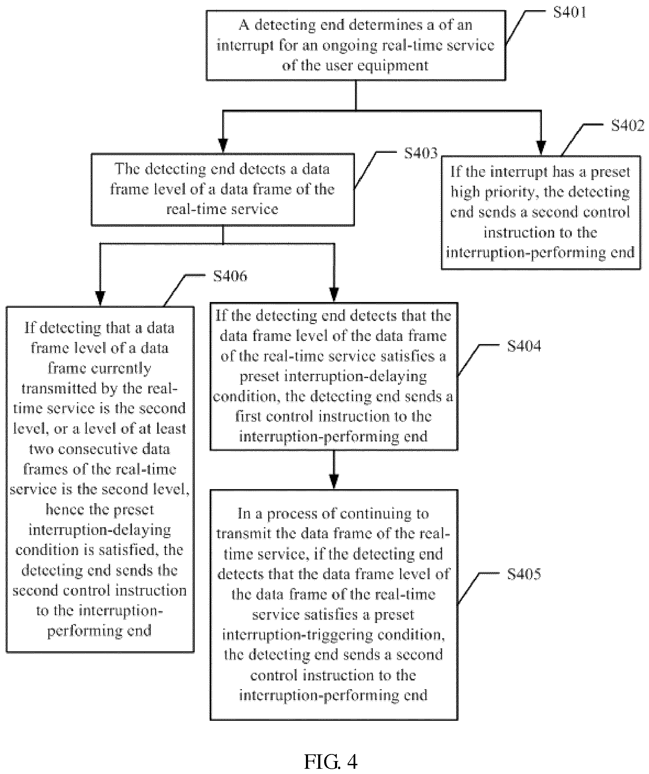

Refer to FIG. 4 which is a schematic flowchart of another method for handling real-time service interruption according to an embodiment of the present invention. The real-time service in the embodiment of the present invention includes a service such as a voice call, video on demand, Voice over Internet Protocol, and distance learning. A data frame level of a data frame of the real-time service in the embodiment of the present invention includes a first level and a second level, where whether a preset interruption-delaying condition is satisfied is determined according to whether the data frame level of the data frame of the real-time service is the first level or the second level. Before an ongoing real-time service of a user equipment needs to be interrupted, the method further includes presetting a priority for various interrupts. The method according to the embodiment of the present invention includes the following:

Optionally, S401: A detecting end determines a priority of an interrupt for the ongoing real-time service of the user equipment.

Specifically, before the ongoing real-time service of the user equipment needs to be interrupted, the method further includes presetting a priority for various interrupts, including presetting an interrupt having a high priority and an interrupt having a low priority. If a level of an interrupt that needs to interrupt the ongoing real-time service of the user equipment is a preset high-priority interrupt, for example, a high-priority interrupt where interruption needs to be performed because a device that currently bears the real-time service cannot perform effective communication because a fault occurs, the interrupt operation may also be directly performed, that is, the following S402 is performed; otherwise, the following S403 is performed.

Optionally, S402: If the interrupt has the preset high priority, the detecting end sends a second control instruction to the interruption-performing end.

Regarding some interrupts whose priority is a high priority, for example, when an interrupt needs to be performed because a device that currently bears the real-time service cannot perform effective communication because a fault occurs, the second control instruction needs to be directly sent, thereby quickly interrupt the real-time service to complete handover. One priority mapping table may be maintained in the detecting end, where a corresponding priority is set and recorded for interrupts caused by various reasons. Specifically, two priorities, that is, a high priority and a low priority, may be set. When a priority of an interrupt is the high priority, an interruption command is directly sent to the user equipment; and when the priority of the interrupt is the low priority, whether to directly perform interruption or delay interruption is determined according to a data frame level of a current data frame.

Optionally, S403: The detecting end detects a data frame level of a data frame of the real-time service.

When the real-time service is a voice call service, the detecting a data frame level of a current data frame of the real-time service includes: extracting a voice coding parameter of a current voice data frame in the voice call service; and comparing the voice coding parameter with a preset characteristic condition; and if the voice coding parameter satisfies the characteristic condition, determining that a level of the voice data frame is the first level; otherwise, determining that the level of the voice data frame is the second level.

S404: If the detecting end detects that the data frame level of the data frame of the real-time service satisfies a preset interruption-delaying condition, the detecting end sends a first control instruction to an interruption-performing end, so that the interruption-performing end, upon receiving the first control instruction, delays interrupting the data frame transmission of the real-time service.

S405: In a process of continuing to transmit the data frame of the real-time service, if the detecting end detects that the data frame level of the data frame of the real-time service satisfies a preset interruption-triggering condition, the detecting end sends a second control instruction to the interruption-performing end, so that the interruption-performing end, upon receiving the second control instruction, interrupts the real-time service.

That is, in a process where the transmission is continued, when transmitted data satisfies the preset interruption-triggering condition, an interruption command is sent to the user equipment, thereby interrupting the real-time service and performing an operation such as handover.

Optionally, S406: If detecting that a data frame level of a data frame currently transmitted by the real-time service is the second level, or a level of at least two consecutive data frames of the real-time service is the second level, hence the preset interruption-delaying condition is satisfied, the detecting end sends the second control instruction to the interruption-performing end.

That is, when the current data frame level or at least two consecutive data frame levels are an unimportant common frame, for example, a low-energy data frame, the real-time service is directly interrupted to perform an operation such as handover.

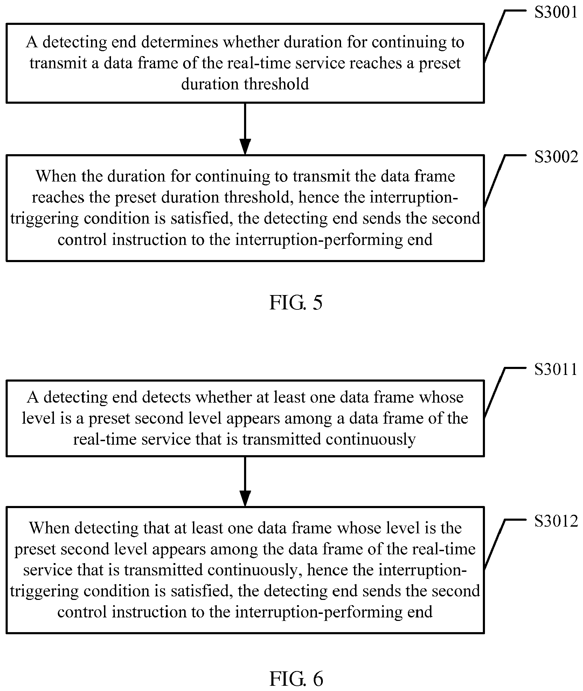

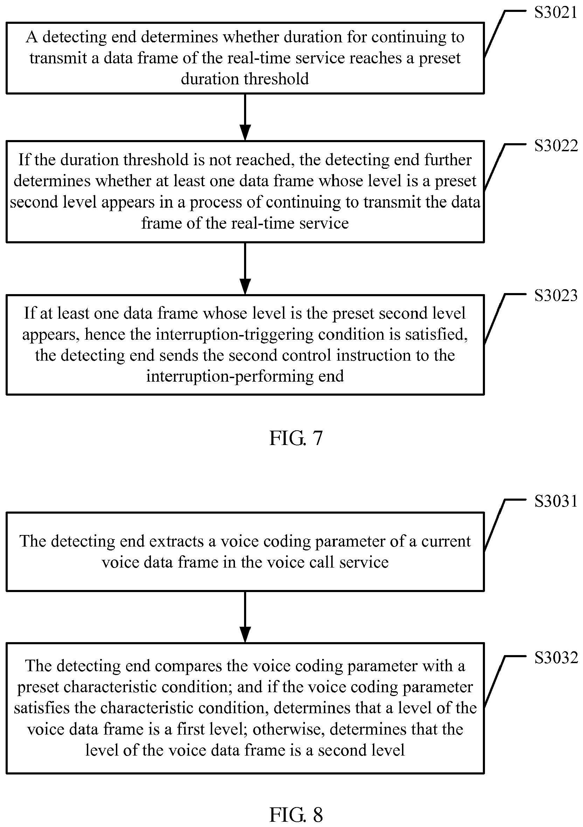

Specifically, refer to FIG. 5 which is one schematic flowchart of a method for handling interruption when continuing to transmit a data frame of a real-time service according to an embodiment of the present invention. The method includes the following:
S3001: A detecting end determines whether duration for continuing to transmit the data frame of the real-time service reaches a preset duration threshold.
   Before the detecting end sends the second control instruction to the interruption-performing end, the method further includes a step of presetting a duration threshold for performing the S3001. In the S3001, whether the duration for continuing the transmission reaches the duration threshold set by a timer may be determined in manner of timing by using a timer. That is, timing is started when determining that the real-time service needs to be interrupted in a delayed manner or continued for transmission upon receiving a handover command indicating that the real-time service of the user equipment needs to be interrupted.
S3002: When the duration for continuing to transmit the data frame reaches the preset duration threshold, hence the interruption-triggering condition is satisfied, the detecting end sends the second control instruction to the interruption-performing end.
   Specifically, refer to FIG. 6 which is another schematic flowchart of a method for handling interruption when continuing to transmit a data frame of a real-time service according to an embodiment of the present invention. The method includes the following:
S3011: A detecting end detects whether at least one data frame whose level is a preset second level appears among a data frame of the real-time service that is transmitted continuously.
   Specifically, a subsequent interrupt may be triggered when one unimportant frame is detected; or a subsequent interrupt is triggered when a specific number of consecutive unimportant frames are detected.
S3012: When detecting that at least one data frame whose level is the preset second level appears among the data frame of the real-time service that is transmitted continuously, hence the interruption-triggering condition is satisfied, the detecting end sends the second control instruction to the interruption-performing end.
   Specifically, refer to FIG. 7 which is one schematic flowchart of a method for handling interruption when continuing to transmit a data frame of a real-time service according to an embodiment of the present invention. The method includes the following:
S3021: A detecting end determines whether duration for continuing to transmit the data frame of the real-time service reaches the preset duration threshold. Before the detecting end sends the second control instruction to the interruption-performing end, the method further includes a step of presetting a duration threshold for performing the S3021. In the S3021, determination may also be performed in a manner of timing by using a timer.
S3022: If the duration threshold is not reached, the detecting end further determines whether at least one data frame whose level is the preset second level appears in a process of continuing to transmit the data frame of the real-time service. Specifically, a subsequent interrupt may be triggered when one unimportant frame is detected; or a subsequent interrupt is triggered when a specific number of consecutive unimportant frames are detected.
S3023: If at least one data frame whose level is the preset second level appears, hence the interruption-triggering condition is satisfied, the detecting end sends the second control instruction to the interruption-performing end.
   Then, refer to FIG. 8 which is a schematic flowchart of a method for determining a data frame level of a voice call service according to an embodiment of the present invention. The method includes the following:
S3031: A detecting end extracts a voice coding parameter of a current voice data frame in the voice call service, where the voice coding parameter includes a frequency parameter and/or an energy parameter, where the frequency parameter includes one or more of a linear spectrum frequency, an adaptive codebook, and a fixed codebook, and the energy parameter includes an adaptive codebook gain and/or a fixed codebook gain.
   One or more of the linear spectrum frequency, the adaptive codebook, and the fixed codebook are mainly used to effectively differentiate a human voice and a non-human sound, where the linear spectrum frequency represents a frequency formant during resonance of a flow of air after passing the vocal folds, the adaptive codebook represents a vibration frequency of the vocal folds of a human. The adaptive codebook gain and/or the fixed codebook gain are mainly used to identify a voice energy value.
S3032: The detecting end compares the voice coding parameter with a preset characteristic condition; and if the voice coding parameter satisfies the characteristic condition, determine that a level of the voice data frame is the first level; otherwise, determine that the level of the voice data frame is the second level.

The characteristic condition may be an energy and/or frequency value determination threshold. The energy and/or frequency represented by the various parameters of the voice coding of the current voice data frame in the voice call service is compared with the preset energy and/or frequency value determination threshold, so as to determine whether a level of the voice data frame is the first level or the second level.

Specifically, in a mobile communication system, voice data of a voice call service is transmitted in a radio link in a form of voice data frames at a rate of one frame every 20 ms after voice coding and compression are performed. Voice coding algorithms in a current GSM system are based on a linear prediction principle, where a voice coding parameter after compression and coding basically may be classified into five types: linear spectrum frequency (Linear Spectrum frequency, LSF), an adaptive codebook (Adaptive Codebook, AC), an adaptive codebook gain (Adaptive Codebook Gain, ACG), a fixed codebook (Fixed Codebook, FC), and a fixed codebook gain (Fixed Codebook Gain, FCG). The five types of voice coding parameters respectively represent different frequency and energy characteristics of a voice in the voice data frame that is transmitted at a rate of one frame every 20 ms; the five types of voice coding parameters may be decoded to obtain an original voice waveform again. Importance of a voice may be easily identified according to a voice waveform, where general division may be performed according to energy. However, because decoding a parameter requires a specific amount of operations, a high cost is caused for decoding each voice data frame in order to identify importance. Therefore, in the embodiment of the present invention, a data frame level of a voice call data frame is identified quickly based on a voice coding parameter instead of decoding the voice coding parameter.

The voice coding parameter includes a frequency parameter and/or an energy parameter.

The frequency parameter includes a linear spectrum frequency and/or an adaptive codebook, and the energy parameter includes an adaptive codebook gain and/or a fixed codebook gain.

Specifically, two types of parameters, namely, the LSF and the AC may be used to effectively differentiate a human voice and a non-human sound, where the AC represents a vibration frequency of vocal cords of a person, and the LSF represents a frequency formant during resonance of a flow of air after passing the vocal folds. When a human voice appears, the LSF becomes unstable (where a value changes significantly) but the AC remain relatively stable (where a value changes slightly). When the human voice disappears, the AC becomes unstable but the LSF becomes relatively stable.

The two types of parameters, namely, the ACG and the FCG, mainly represent voice energy, when energy is high, a probability of an important frame is high, and when energy is low, and a probability of importance is low.

The BTS extracts any one or two of the LSF and the AC of the current voice data frame, and extracts any one or two of the ACG and the FCG. In the embodiment of the present invention, it is assumed that the BTS extracts four types of voice coding parameters, namely the LSF, the AC, the ACG, and the FCG of the current voice data frame.

The BTS compares the voice coding parameters with a preset characteristic condition, where the characteristic condition is preset respectively with respect to different voice coding parameters. The BTS compares the four types of voice coding parameters respectively with the preset characteristic condition thereof to obtain a comparing result; after the respectively comparison of the four types of parameters, performs combined determination to determine whether the current voice data frame represents a high-energy human voice, a low-energy human voice, a high-energy non-human sound, or a low-energy non-human sound; and then further determine a level of the current voice data frame. If the voice data frame is classified into two levels, a voice data frame representing a low-energy non-human sound is the second level, and the remaining voice data frames are the first level. Accordingly, the voice data frame representing the low-energy non-human sound is a portion of the voice call service on which the impact of handover is small.

Further, specifically, the present invention further provides a computer storage medium, where the computer storage medium stores a program, and the program includes steps of the method according to any one of embodiments illustrated in FIG. 1 to FIG. 8 when the program runs.

Based on the embodiments described above, the present invention has the following benefits:
In the embodiment of the present invention, a level of a data frame of a real-time service that needs to be interrupted is identified, so as to delay interrupting the real-time service when the real-time service needs to be interrupted but a current frame of the real-time service is an important data frame, and interruption time is selected again, so that an interrupt process occurs at a position of an unimportant data frame, thereby reducing, as much as possible, an adverse impact of the interrupt process on real-time service quality.

The following describes a method for handling service interruption according to an embodiment of the present invention by using an interruption-performing end.

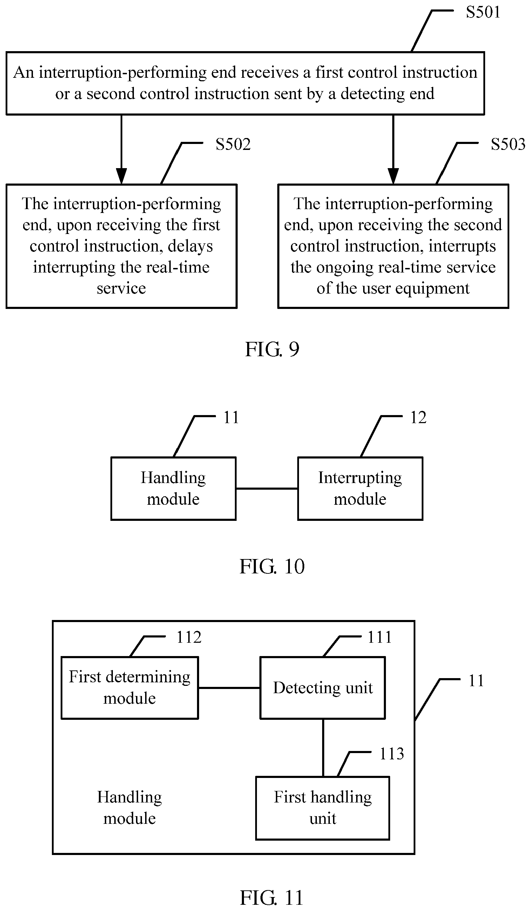

FIG. 9 is a schematic flowchart of another method for handling service interruption according to an embodiment of the present invention. Specifically, the method according to the embodiment of the present invention includes the following:
S501: An interruption-performing end receives a first control instruction or a second control instruction sent by a detecting end.

The first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition.

The second control instruction is sent by the detecting end to the interruption-performing end after the detecting end detects that the data frame level of the data frame of the real-time service satisfies a preset interruption-triggering condition in a process of continuing to transmit the data frame of the real-time service.
S502: The interruption-performing end, upon receiving the first control instruction, delays interrupting the real-time service.
S503: The interruption-performing end, upon receiving the second control instruction, interrupts the ongoing real-time service of the user equipment.

The detecting end and the interruption-performing end may both be set on a BTS to perform steps such as determining a level of a data frame of a real-time service, delaying interruption, and performing an interrupt operation. In another embodiment, the detecting end and the interruption-performing end may both be set on a base station controller BSC and performs the steps of determining the level of the data frame of the real-time service, delaying the interruption, and performing the interrupt operation; alternatively, the detecting end is set on the BSC and performs a step of determining the level of the data frame of the real-time service, and the interruption-performing end is set on the BTS and performs the step of delaying the interruption and performing the interrupt operation; alternatively, the detecting end is set on the BTS and performs the step of determining the level of the data frame of the real-time service, and the interruption-performing end is set on the base station controller, where after the BTS and the BSC exchange information so that the BSC receives a first control instruction or a second control instruction, the BSC performs the step of delaying the interruption and performing the interrupt operation in a manner of sending a delay-interrupt command or an interrupt command to the BTS.

When the interruption-performing end is set on the base station controller BSC, the S502 may specifically include: sending, by the interruption-performing end upon receiving the first control instruction, a delay-interrupt command to a base station BTS, so that the base station BTS delays interrupting the ongoing real-time service of the user equipment served by the base station BTS; and the S503 may specifically include: sending, by the interruption-performing end upon receiving the second control instruction, an interrupt instruction to the base station BTS, so that the base station BTS interrupts the ongoing real-time service of the user equipment served by the base station BTS.

In other words, when the BSC is used as the interruption-performing end to perform interruption delaying or interrupt operation, the BSC may control, by sending an instruction to the BTS, the BTS to complete the interruption delaying and interrupt operation on the real-time service.

In the embodiment of the present invention, a level of a data frame of a real-time service that needs to be interrupted is identified, so as to delay interrupting the data frame transmission of the real-time service when the real-time service needs to be interrupted but the current data frame of the real-time service is an important data frame, and interruption time is selected again, so that an interrupt process occurs at a position of an unimportant data frame, thereby reducing, as much as possible, an adverse impact of the interrupt process on real-time service quality.

The following describes in detail a related apparatus according to an embodiment of the present invention.

Refer to FIG. 10 which is a schematic structural diagram of a detecting end for service interruption according to an embodiment of the present invention. The detecting end includes: a handling module 11 and an interrupting module 12, where
the handling module 11 is configured to send a first control instruction to an interruption-performing end when data frame transmission of an ongoing real-time service of a user equipment needs to be interrupted and if it is detected that a data frame level of a data frame of the real-time service satisfies a preset interruption-delaying condition, so that the interruption-performing end, upon receiving the first control instruction, delays interrupting the real-time service.

A reason for interrupting a real-time service may include the following cases: a service needs to be handed over to another device having higher quality because of a quality limit of a current serving device; or an ongoing service needs to be handed over to another device for continuing because of a reason such as overall service distribution and arrangement; or an ongoing real-time service needs to be handed over to another device that can provide a normal service because a fault occurs on a device.

After determining that the real-time service needs to be interrupted in the cases described above, the handling module 11 sends, when the data frame level of the data frame in the real-time service is the first level, the first control command to the interruption-performing end to delay initiating an interrupt operation, and continues to transmit the data frame. The data frame level of the data frame of the real-time service may be determined before the real-time service needs to be interrupted or be determined after the real-time service needs to be interrupted.

The interrupting module 12 is configured to send a second control instruction to the interruption-performing end if it is detected that the data frame level of the data frame of the real-time service satisfies a preset interruption-triggering condition in a process of continuing to transmit the data frame of the real-time service, so that the interruption-performing end, upon receiving the second control instruction, interrupts the real-time service.

Moreover, the interrupting module 12 is further configured to send, when it is detected that at least one data frame whose level is the second level appears among the data frame of the real-time service that is transmitted continuously, hence the interruption-triggering condition is satisfied, the second control instruction to the interruption-performing end.

The first control instruction is used to instruct the interruption-performing end to delay interruption, and the second control instruction instructs the interruption-performing end to perform interruption.

The interrupting module 12 may determine whether the interruption-triggering condition is satisfied by determining: that the interruption-triggering condition is satisfied when duration for continuing to transmit the data frame of the real-time service reaches a preset duration threshold, for example, timing of a time is completed; or that the interruption-triggering condition is satisfied when detecting that at least two data frames whose data frame level is the second level appears in a process of continuing to transmit the data frame; or determining whether duration for continuing to transmit the data frame reaches the duration threshold, and if the duration threshold is not reached, within the duration threshold, determining that the interruption-triggering condition is satisfied when detecting that at least two data frames whose data frame level is the second level appears in a process of continuing to transmit the data frame.

Specifically, the real-time service in the embodiment of the present invention mainly includes a service that has a high requirement on timeliness of information transmission and is sensitive to a delay and jitter in information transmission, which mainly includes but is not limited to a voice call, a video on demand, a voice over Internet Protocol, and distance learning.

The detecting end and the interruption-performing end may both be set on a BTS. In another embodiment, the detecting end and the interruption-performing end may both be set on a BSC; or the detecting end is set on the BSC and the interruption-performing end is set on a BTS; or the detecting end is set on a BTS and the interruption-performing end is set on a BSC, and by using interaction between the BTS and the BSC, after the BSC receives the first control command or the second control command, the BSC performs interruption delaying and interrupt operation in a manner of sending a delay-interrupt command or an interruption command to the BTS.

The following describes the technical solution of the embodiment of the present invention by using an example where a real-time service is a voice call service, a data frame is voice data, a voice data frame is a voice data frame, and an interruption command is a handover command.

Similarly, the determining whether to interrupt data frame transmission of an ongoing real-time service of a user equipment includes the following:

Assume that, in a process where a user equipment is in a call with another user equipment, in order to ensure continuity and call quality of the voice call, interruption processing needs to be performed on a voice call service to handover the user equipment from a bad-quality cell to a high-quality cell. Firstly, the user equipment and a BTS measures and acquires radio channel quality respectively in two directions. The user equipment measures a change in quality of a signal that is sent by the BTS and reaches the user equipment through a channel, and the BTS measures a change in quality of a signal in a reversed direction; then, the user equipment and the base station periodically, for example, every 480 ms (millisecond, millisecond), report a measurement report to the BSC, and the BSC processes the measurement reports, so as to determine, according to a processing result and a preset handover determining algorithm, whether handover needs to be triggered at the current moment. The BSC, by using a handover algorithm, determines and generate a handover command to deliver to the BTS, that is, determines whether to interrupt the voice call service of the user equipment; if yes, notify the BTS to determine and process whether to perform interruption immediately; and the BTS, upon receiving the handover command, that is, when the ongoing voice call service of the user equipment needs to be interrupted.

Specifically, in a segment of voice, different impact is exerted on subjective perception of a user for loss of different voice data frames. For example, no voice exists during a gap of the user's dialogue. In such a case, if some common voice data frames are lost, the voice data frames in such cases contains mainly some background noises, which does not affect the subjective perception of the user significantly; however, if a voice data frame is lost when the user is speaking, a sentence may be lost or cannot be understood, in such a case, the subjective perception of the user is greatly affected. According to different impacts on the subjective perception of the user, voice data frames may be classified into different levels, for example, be classified into two levels, namely, a first level and a second level, or be classified into more levels such as three levels or four levels, where the differentiation and classification may be performed specifically based on energy, frequency, amplitude, and the like.

The embodiment of the present invention is described by using an example where voice data frames are classified into two levels, where a first level indicates that a voice data frame is an import voice data frame that carries a human voice, and a second level indicates that a voice data frame is an unimportant voice data frame that carries a non-human sound such as a background noise. Loss of the important voice data frame whose level is the first level may cause the subjective perception to decrease greatly, and loss of the unimportant voice data frame whose level is the second level affects the subjective perception slightly. Other cases may be inferred similarly, which are not described herein.

If a level of voice data of the voice call service is the second level, indicating a current phase of unimportant voice data frames, handover may be performed; according, the interrupting module 12 may directly send the second control command to the interruption-performing end.

If a level of a current voice data frame of voice data of the voice call service is the first level, it indicates a current phase of import voice data frames. The handling module 11 performs delaying process by sending the first control command to the interruption-performing end to delay interruption. The handling module 11 may also initiate a handover delaying timer to start timing, where the transmission of the voice data is continued. The interrupting module 12 determines whether a preset interruption-triggering condition is satisfied in a process of continuing to transmit the voice data.

Further, optionally, the data frame level of the data frame of the real-time service may be classified at least into a first level and a second level; and whether the preset interruption-delaying condition is satisfied may be determined according to whether the data frame level of the data frame of the real-time service is the first level or the second level.

In the embodiment of the present invention, the detecting end may further store a preset duration threshold by using a first presetting module; and the interrupting module 12 is specifically configured to send, when it is detected that duration for continuing to transmit the data frame of the real-time service reaches the preset duration threshold, hence the interruption-triggering condition is satisfied, the second control instruction to the interruption-performing end; or
the interrupting module 12 is specifically configured to send, when it is detected that at least one data frame whose level is the second level appears among the data frame of the real-time service that is transmitted continuously, hence the interruption-triggering condition is satisfied, the second control instruction to the interruption-performing end; or
the detecting end further stores a preset duration threshold by using a second presetting module, and the interrupting module 12 may specifically include a determining unit and an interrupting unit.

The determining unit is configured to determine whether duration for continuing to transmit the data frame of the real-time service reaches the preset duration threshold, and if the duration threshold is not reached, further determining whether at least one data frame whose level is the second level appears in a process of continuing to transmit the data frame of the real-time service.

The interrupting unit is configured to send, if at least one data frame whose level is the second level appears, hence the interruption-triggering condition is satisfied, the second control instruction to the interruption-performing end.

Further, specifically, refer to FIG. 11 which is a specific schematic structural diagram of a handling module 11 in an apparatus for handling service interruption illustrated in FIG. 10. The handling module 11 includes:
a detecting unit 111, configured to detect, in real time, the data frame level of the data frame of the ongoing real-time service of the user equipment;
a first determining unit 112, configured to determine whether the ongoing real-time service of the user equipment needs to be interrupted; and
a first handling unit 113, configured to send, when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, the first control instruction to the interruption-performing end.

That is, the detecting unit 111 keeps detecting a data frame level of each data frame of the ongoing real-time service of the user equipment.

The first determining unit 112 may, upon receiving a command sent by another device for requiring interrupting the real-time service of the user equipment, for example, a handover command, determine that the ongoing real-time service of the user equipment needs to be interrupted, and may also directly determine, according to the cases described above where the real-time service needs to be interrupted, whether the real-time service of the user equipment needs to be interrupted.

Accordingly, the first handling unit 113 may control, when the data frame level of the data frame is the first level, to delay performing interruption and continue to transmit the data frame.

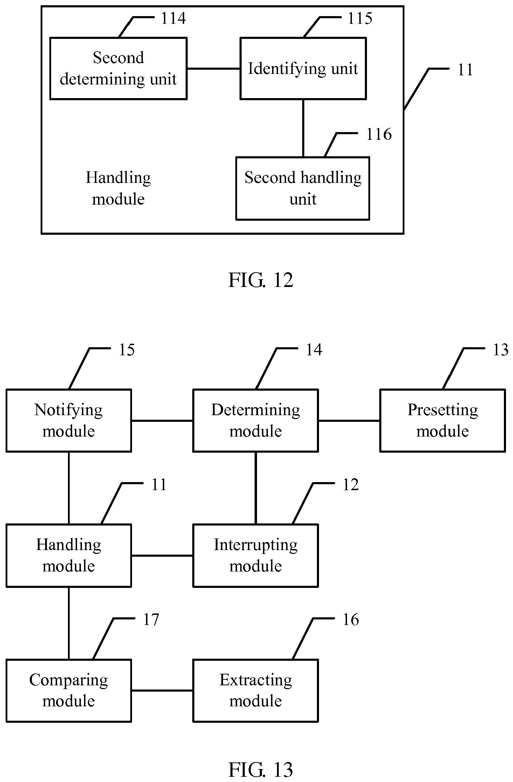

Further, refer to FIG. 12 which is another specific schematic structural diagram of a handling module 1 in an apparatus for handling service interruption illustrated in FIG. 10. The handling module 11 includes:
a second determining unit 114, configured to determine whether the ongoing real-time service of the user equipment needs to be interrupted;
an identifying unit 115, configured to detect, when the data frame transmission of the ongoing real-time service of the user equipment needs to be interrupted, a data frame level of a data frame transmitted by the ongoing real-time service of the user equipment; and
a second handling unit 116, configured to send, if the data frame level of the data frame transmitted by the ongoing real-time service is the preset first level, hence the preset interruption-delaying condition is satisfied, the first control instruction to the interruption-performing end.

In the embodiment of the present invention, the handling module 11 first determines, by using the second determining unit 114, whether a command for interrupting the real-time service of the user equipment is received; then, if a corresponding command is received, completes identification and processing, by using the identifying unit 115 and the second handling unit 116, on the level of the data frame.

Similarly, the second determining unit 114 may, upon receiving a command sent by another device for requiring interrupting the real-time service of the user equipment, for example, a handover command, determine that the ongoing real-time service of the user equipment needs to be interrupted, and may also directly determine, according to the cases described above where the real-time service needs to be interrupted, whether the real-time service of the user equipment needs to be interrupted.

Further, refer to FIG. 13 which is a schematic structural diagram of an apparatus for handling service interruption according to an embodiment of the present invention. The handling apparatus according to the embodiment of the present invention includes the handling module 11 and the interrupting module 12 in the embodiment described above; and in the embodiment, the handling apparatus further includes a presetting module 13, a determining module 14, and a notifying module 15, where
the presetting module 13 is configured to preset a priority for various interrupts which include an interrupt having a preset high priority;
the determining module 14 is configured to determine a priority of an interrupt for the ongoing real-time service of the user equipment; where
the interrupting module 12 is further configured to send, if the interrupt has the preset high priority, the second control instruction to the interruption-performing end; and
accordingly, the notifying module 15 is configured to notify the handling module 11 if the interrupt does not have the preset high priority.

The handling module 11 is specifically configured to detect, when a determining result of the determining module 14 is that the interrupt has a preset low priority, a data frame level of the real-time service, and performs that, when the data frame level of the real-time service satisfies the preset interruption-delaying condition, delaying the interruption and continuing to transmit the data frame of the real-time service;
or configured to notify the interrupting module to, if the current data frame level of the real-time service if the preset second level, or at least two data frames whose level is the second level appears within the preset time threshold range of the real-time service, interrupting the ongoing real-time service of the user equipment.

The interrupting module 12 is further configured to perform, when the preset interruption-triggering condition is satisfied in a process of continuing to transmit the data frame, the interrupt operation on the ongoing real-time service of the user equipment.

Regarding some interrupts whose priority is a high priority, for example, when an interrupt needs to be performed because a device that currently bears the real-time service cannot perform effective communication because a fault occurs, the interrupt command needs to be directly sent, thereby quickly interrupt the real-time service to complete handover. One priority mapping table may be maintained, where a corresponding priority is set and recorded for an interrupt caused by various reasons. Specifically, two priorities, namely, a high priority and a low priority, may be set. When the determining module 14 determines, according to the priority mapping table, that a priority of a current interrupt is a high priority, performs an interrupt operation by using the interrupting module 12, and sends an interrupt command to the user equipment; and when the priority is the low priority, notifies the handling module 11 to perform corresponding processing according to the data frame of the real-time service, and the interrupting module 12 determines whether the data frame of the real-time service that is continued for transmission satisfies the preset interruption-triggering condition, and when the interruption-triggering condition is satisfied, perform the interrupt operation on the ongoing real-time service of the user equipment.

Further, refer to FIG. 13 again, regarding a voice call service, the apparatus for handling service interruption according to the embodiment of the present invention may further include an extracting module 16 and a comparing module 17.

The extracting module 16 is configured to extract, when the real-time service is a voice call service, a voice coding parameter of a current voice data frame in the voice call service, where the voice coding parameter includes a frequency parameter and/or an energy parameter, where the frequency parameter includes one or more of a linear spectrum frequency, an adaptive codebook, and a fixed codebook, and the energy parameter includes an adaptive codebook gain and/or a fixed codebook gain.

One or more of the linear spectrum frequency, the adaptive codebook, and the fixed codebook are mainly used to effectively differentiate a human voice and a non-human sound, where the linear spectrum frequency represents a frequency formant during resonance of a flow of air after passing the vocal folds, the adaptive codebook represents a vibration frequency of the vocal folds of a human. The adaptive codebook gain and/or the fixed codebook gain are mainly used to identify a voice energy value.

The comparing module 17 is configured to compare the voice coding parameter with a preset characteristic condition; and if the voice coding parameter satisfies the characteristic condition, determine that a level of the voice data frame is the first level; otherwise, determine that the level of the voice data frame is the second level.

The characteristic condition may be an energy and/or frequency value determination threshold. The energy and/or frequency represented by the various parameters of the voice coding of the current voice data frame in the voice call service is compared with the preset energy and/or frequency value determination threshold, so as to determine whether a level of the voice data frame is the first level or the second level.

Specifically, in a mobile communication system, voice data of a voice call service is transmitted in a radio link in a form of voice data frames at a rate of one frame every 20 ms after voice coding and compression are performed. Voice coding algorithms in a current GSM system are based on a linear prediction principle, where a voice coding parameter after compression and coding basically may be classified into five types: LSF, AC, ACG, FC, and FCG. The five types of voice coding parameters respectively represent different frequency and energy characteristics of a voice in the voice data frame that is transmitted at a rate of one frame every 20 ms; the five types of voice coding parameters may be decoded to obtain an original voice waveform again. Importance of a voice may be easily identified according to a voice waveform, where general division may be performed according to energy. However, because decoding a parameter requires a specific amount of operations, a high cost is caused for decoding each voice data frame in order to identify importance. Therefore, in the embodiment of the present invention, a data frame level of a voice call data frame is identified quickly based on a voice coding parameter instead of decoding the voice coding parameter.

The voice coding parameter includes a frequency parameter and/or an energy parameter.

The frequency parameter includes a linear spectrum frequency and/or an adaptive codebook, and the energy parameter includes an adaptive codebook gain and/or a fixed codebook gain.

Specifically, two types of parameters, namely, the LSF and the AC may be used to effectively differentiate a human voice and a non-human sound, where the AC represents a vibration frequency of vocal cords of a person, and the LSF represents a frequency formant during resonance of a flow of air after passing the vocal folds. When a human voice appears, the LSF becomes unstable (where a value changes significantly) but the AC remain relatively stable (where a value changes slightly). When the human voice disappears, the AC becomes unstable but the LSF becomes relatively stable.

The two types of parameters, namely, the ACG and the FCG, mainly represent voice energy, when energy is high, a probability of an important frame is high, and when energy is low, and a probability of importance is low.

The BTS extracts any one or two of the LSF and the AC of the current voice data frame, and extracts any one or two of the ACG and the FCG. In the embodiment of the present invention, it is assumed that the BTS extracts four types of voice coding parameters, namely the LSF, the AC, the ACG, and the FCG of the current voice data frame.

The BTS compares the voice coding parameters with a preset characteristic condition, where the characteristic condition is preset respectively with respect to different voice coding parameters. The BTS compares the four types of voice coding parameters respectively with the preset characteristic condition thereof to obtain a comparing result; after the respectively comparison of the four types of parameters, performs combined determination to determine whether the current voice data frame represents a high-energy human voice, a low-energy human voice, a high-energy non-human sound, or a low-energy non-human sound; and then further determine a level of the current voice data frame. If the voice data frame is classified into two levels, a voice data frame representing a low-energy non-human sound is the second level, and the remaining voice data frames are the first level. Accordingly, the voice data frame representing the low-energy non-human sound is a portion of the voice call service on which the impact of handover is small.

Based on the embodiments described above, the present invention has the following benefits:

In the embodiment of the present invention, a level of a current data frame of a real-time service that needs to be interrupted is identified, so as to delay interrupting the data frame transmission of the real-time service when the real-time service needs to be interrupted but the current data frame of the real-time service is an important data frame, and interruption time is selected again, so that an interrupt process occurs at a position of an unimportant data frame, thereby reducing, as much as possible, an adverse impact of the interrupt process on real-time service quality.

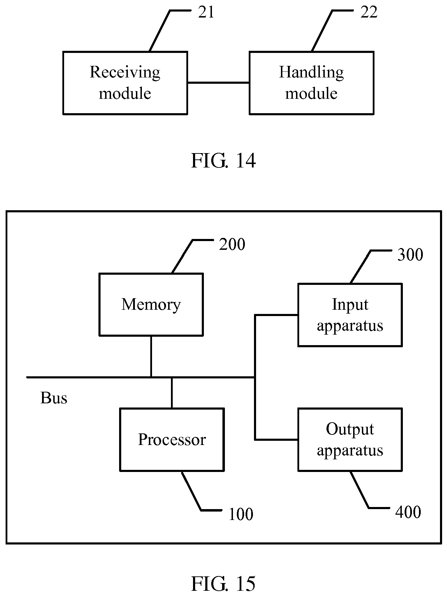

Refer to FIG. 14 which is a schematic structural diagram of an interruption-performing end for service interruption according to an embodiment of the present invention. The interruption-performing end according to the embodiment of the present invention includes:
a receiving module 21, configured to receive a first control instruction or a second control instruction sent by a detecting end;
where the first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition; and
the second control instruction is sent by the detecting end to the interruption-performing end in a process of continuing to transmit the data frame of the real-time service and after the detecting end detects that the data frame level of the data frame of the real-time service satisfies a preset interruption-triggering condition; and
a handling module 22, configured to, upon receiving the first control instruction, delay interrupting the real-time service; and upon receiving the second control instruction, interrupt the ongoing real-time service of the user equipment.

The detecting end and the interruption-performing end may both be set on a BTS. In another embodiment, the detecting end and the interruption-performing end may both be set on a BSC; or the detecting end is set on the BSC and the interruption-performing end is set on a BTS; or the detecting end is set on a BTS and the interruption-performing end is set on a BSC, and by using interaction between the BTS and the BSC, after the BSC receives the first control command or the second control command, the BSC performs interruption delaying and interrupt operation in a manner of sending a delay-interrupt command or an interruption command to the BTS.

That is, when the interruption-performing end is set on the BSC, the handling module 22 is specifically configured to, upon receiving the first control instruction, send a delay-interrupt command to the base station BTS, so that the base station BTS delays interrupting the ongoing real-time service of the user equipment served by the base station BTS; and
upon receiving the second control instruction, send an interrupt instruction to the base station BTS, so that the base station BTS interrupts the ongoing real-time service of the user equipment served by the base station BTS.

Further, specifically, FIG. 15 is a schematic structural diagram of a network device according to an embodiment of the present invention. The network device according to the embodiment of the present invention includes an input apparatus 300, an output apparatus 400, a memory 200, and a processor 100, where the input apparatus 300, the output apparatus 400, the memory 200, and the processor 100 may establish a data connection by using a bus or establish a data connection in another manner. The embodiment is described by using a bus connection.

The processor 100 performs the following steps:
send a first control instruction to an interruption-performing end when data frame transmission of an ongoing real-time service of a user equipment needs to be interrupted and if it is detected that a data frame level of a data frame of the real-time service satisfies a preset interruption-delaying condition, so that the interruption-performing end, upon receiving the first control instruction, delays interrupting the real-time service; and
send a second control instruction to the interruption-performing end in a process of continuing to transmit the data frame of the real-time service and if it is detected that the data frame level of the data frame of the real-time service satisfies a preset interruption-triggering condition, so that the interruption-performing end, upon receiving the second control instruction, interrupts the real-time service.

Alternatively, the data frame level, which is detected by the processor 100, of the data frame of the real-time service is classified at least into a first level and a second level; and whether the preset interruption-delaying condition is satisfied is determined according to whether the data frame level of the data frame of the real-time service is the first level or the second level.

The real-time service includes but is not limited to a service such as a voice call, video on demand, Voice over Internet Protocol, and distance learning. A reason for interrupting a real-time service may include but is not limited to the following cases: a service needs to be handed over to another device having higher quality because of a quality limit of a current serving device; or an ongoing service needs to be handed over to another device for continuing because of a reason such as overall service distribution and arrangement; or an ongoing real-time service needs to be handed over to another device that can provide a normal service because a fault occurs on a device.

When the interrupt command of the other network device is received, for example, the handover command that is determined and generated by the BSC for interrupting the voice call service of the user equipment, it is determined that the ongoing real-time service of the user equipment needs to be interrupted, thereby initiating the step of determining whether to perform interruption immediately.

The processor 100 may detect the data frame level in real time or trigger detection on the data frame level when the real-time service of the user equipment needs to be interrupted, which specifically includes the following:

The processor 100 specifically performs the following step when performing the sending the first control instruction to the interruption-performing end when the data frame transmission of the ongoing real-time service of the user equipment needs to be interrupted and if it is detected that the data frame level of the data frame of the real-time service satisfies the preset interruption-delaying condition:
detect, in real time, the data frame level of the data frame of the ongoing real-time service of the user equipment; and when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, send the first control instruction to the interruption-performing end.

Alternatively, the processor 100 specifically performs the following steps when performing the sending the first control instruction to the interruption-performing end when the data frame transmission of the ongoing real-time service of the user equipment needs to be interrupted and if it is detected that the data frame level of the data frame of the real-time service satisfies the preset interruption-delaying condition:
when the data frame transmission of the ongoing real-time service of the user equipment needs to be interrupted, detect a data frame level of a data frame transmitted by the ongoing real-time service of the user equipment; and if the data frame level of the data frame transmitted by the ongoing real-time service is the preset first level, hence the preset interruption-delaying condition is satisfied, send the first control instruction to the interruption-performing end.

Further, the processor 100 may determine, in the following three manners, whether to interrupt the real-time service whose data frame is continued to be transmitted.

The processor 100 further performs, before performing the sending the second control instruction to the interruption-performing end, a step including presetting a duration threshold; and
the processor 100 specifically performs the following step when performing the sending the second control instruction to the interruption-performing end in the process of continuing to transmit the data frame of the real-time service and if it is detected that the data frame level of the data frame of the real-time service satisfies the preset interruption-triggering condition:
when detecting that duration for continuing to transmit the data frame of the real-time service reaches the preset duration threshold, hence the interruption-triggering condition is satisfied, send the second control instruction to the interruption-performing end.

Alternatively, the processor 100 specifically performs the following step when performing the sending the second control instruction to the interruption-performing end in the process of continuing to transmit the data frame of the real-time service and if it is detected that the data frame level of the data frame of the real-time service satisfies the preset interruption-triggering condition:
when detecting that at least one data frame whose level is the second level appears among the data frame of the real-time service that is transmitted continuously, hence the interruption-triggering condition is satisfied, send the second control instruction to the interruption-performing end.

Alternatively, the processor 100 further performs, before sending the second control instruction to the interruption-performing end, a step including presetting a duration threshold; and
the processor specifically performs the following step when performing the sending the second control instruction to the interruption-performing end in the process of continuing to transmit the data frame of the real-time service and if it is detected that the data frame level of the data frame of the real-time service satisfies the preset interruption-triggering condition:
determine whether duration for continuing to transmit the data frame of the real-time service reaches the preset duration threshold; and if the duration threshold is not reached, further determine whether at least one data frame whose level is the second level appears in a process of continuing to transmit the data frame of the real-time service; and if at least one data frame whose level is the second level appears, hence the interruption-triggering condition is satisfied, send the second control instruction to the interruption-performing end.

Further, the processor 100 further performs the following steps:
if detecting that a data frame level of a data frame currently transmitted by the real-time service is the second level, or a level of at least two consecutive data frames of the real-time service is the second level, hence the preset interruption-triggering condition is satisfied, send the second control instruction to the interruption-performing end.

Further, the processor 100 further performs, before performing the determining that the ongoing real-time service of the user equipment needs to be interrupted, a step including presetting a priority for various interrupts which include an interrupt having a preset high priority; and the processor 100 further performs the following step when the ongoing real-time service of the user equipment needs to be interrupted:
determine a priority of an interrupt for the ongoing real-time service of the user equipment; if the interrupt has the preset high priority, send the second control instruction to the interruption-performing end; and if the interrupt does not have the preset high priority, perform the step of delaying, if the data frame level of the data frame of the real-time service satisfies the preset interruption-delaying condition, the interruption.

Further, the processor 100 further performs the following step when detecting a current data frame level of the real-time service when the real-time service is a voice call service:
extract a voice coding parameter of a current voice data frame in the voice call service; and compare the voice coding parameter with a preset characteristic condition; and if the voice coding parameter satisfies the characteristic condition, determine that a level of the voice data frame is the first level; otherwise, determine that the level of the voice data frame is the second level.

The network device according to the embodiment of the present invention may be a base station BTS or a base station controller BSC; and the interruption-performing end may be a base station or a base station controller. Indeed, in another embodiment, the network device may also be implemented by using another device having functions that are the same as or similarly to those of the BTS, where the present invention is not limited thereto.

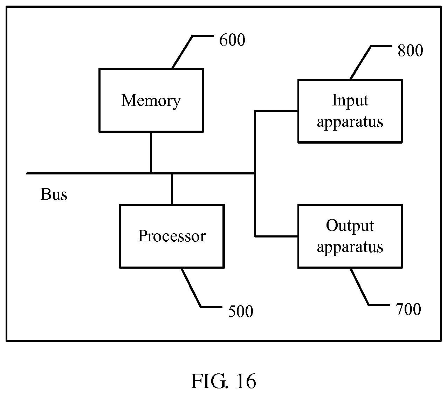

Further, refer to FIG. 16 which is a schematic structural diagram of another network device according to an embodiment of the present invention. The network device according to the embodiment of the present invention includes an input apparatus 800, an output apparatus 700, a memory 600, and a processor 500, where the processor 500 performs the following steps:
receive a first control instruction or a second control instruction sent by a detecting end; upon receiving the first control instruction, delay interrupting the real-time service; and upon receiving the second control instruction, interrupt the ongoing real-time service of the user equipment; where
the first control instruction is sent by the detecting end when data frame transmission of the ongoing real-time service of the user equipment needs to be interrupted and after the detecting end detects that a data frame level of a data frame of the real-time service satisfies a preset interruption-delaying condition; and
the second control instruction is sent by the detecting end in a process of continuing to transmit the data frame of the real-time service and after the detecting end detects that the data frame level of the data frame of the real-time service satisfies a preset interruption-triggering condition.

The processor 500 specifically performs the following steps when performing the delaying, upon receiving the first control instruction, interrupting the real-time service:
upon receiving the first control instruction, send a delay-interrupt command to a base station BTS, so that the base station BTS delays interrupting the ongoing real-time service of the user equipment served by the base station BTS; and
the processor specifically performs the following step when performing the interrupting, upon receiving the second control instruction, the ongoing real-time service of the user equipment:
   upon receiving the second control instruction, send an interrupt instruction to the base station BTS, so that the base station BTS interrupts the ongoing real-time service of the user equipment served by the base station BTS.

The network device may be a base station or a base station controller, and the detecting end may be a base station BTS or a base station controller BSC.

Based on the embodiments described above, the present invention has the following benefits:

In the embodiments of the present invention, a level of a current data frame of a real-time service that needs to be interrupted is identified, so as to delay interrupting data frame transmission of the real-time service when the real-time service needs to be interrupted but the current data frame of the real-time service is an important data frame, and interruption time is selected again, so that an interrupt process occurs at a position of an unimportant data frame, thereby reducing, as much as possible, an adverse impact of the interrupt process on real-time service quality.

A person of ordinary skill in the art may understand that all or a part of the processes of the method embodiments may be implemented by a computer program instructing relevant hardware. The program may be stored in a computer readable storage medium. When the program runs, the processes of the method embodiments are performed. The storage medium may include: a magnetic disc, an optical disc, a read-only memory (Read-Only Memory, ROM), or a random access memory (Random Access Memory, RAM).

The above are merely exemplary embodiments of the present invention. However, the protection scope of the present invention is not limited thereto. Therefore, equivalent changes derived according to the claims of the present invention shall fall within the protection scope of the present invention.

## Claims

1. A method for handling service interruption, comprising:
sending(101), by a detecting end, a first control instruction to an interruption-performing end when data frame transmission of an ongoing real-time service of a user equipment needs to be interrupted and if the detecting end detects that a data frame level of a data frame of the real-time service satisfies a preset interruption-delaying condition, so that the interruption-performing end, upon receiving the first control instruction, delays interrupting the data frame transmission of the real-time service; and
sending(102), by the detecting end, a second control instruction to the interruption-performing end in a process of continuing to transmit a data frame of the real-time service and if the detecting end detects that a current data frame level of the real-time service satisfies a preset interruption-triggering condition, so that the interruption-performing end, upon receiving the second control instruction, interrupts the real-time service.

2. The method according to claim 1, wherein the data frame level of the data frame of the real-time service is classified at least into a first level and a second level; and whether the preset interruption-delaying condition is satisfied is determined according to whether the data frame level of the data frame of the real-time service is the first level or the second level.

3. The method according to claim 2, wherein the sending, by the detecting end, the first control instruction to the interruption-performing end when the data frame transmission of the ongoing real-time service of the user equipment needs to be interrupted and if the detecting end detects that the data frame level of the data frame of the real-time service satisfies the preset interruption-delaying condition comprises:
detecting, by the detecting end in real time, the data frame level of the data frame of the ongoing real-time service of the user equipment; and
when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, sending, by the detecting end, the first control instruction to the interruption-performing end.

4. The method according to claim 2, wherein the sending, by the detecting end, the first control instruction to the interruption-performing end when the data frame transmission of the ongoing real-time service of the user equipment needs to be interrupted and if the detecting end detects that the data frame level of the data frame of the real-time service satisfies the preset interruption-delaying condition comprises:
detecting, by the detecting end when the data frame transmission of the ongoing real-time service of the user equipment needs to be interrupted, the data frame level of the data frame transmitted by the ongoing real-time service of the user equipment; and
if the data frame level of the data frame transmitted by the ongoing real-time service is the preset first level, hence the preset interruption-delaying condition is satisfied, sending, by the detecting end, the first control instruction to the interruption-performing end.

5. The method according to any one of claims 2 to 4, wherein before the sending, by the detecting end, the second control instruction to the interruption-performing end, the method further comprises presetting a duration threshold; and
the sending, by the detecting end, the second control instruction to the interruption-performing end in the process of continuing to transmit the data frame of the real-time service and if the detecting end detects that the current data frame level of the real-time service satisfies the preset interruption-triggering condition comprises:
when the detecting end detects that duration for continuing to transmit the data frame of the real-time service reaches the preset duration threshold, hence the interruption-triggering condition is satisfied, sending, by the detecting end, the second control instruction to the interruption-performing end.

6. A method for handling service interruption, wherein the method comprising:
receiving(501), by an interruption-performing end, a first control instruction or a second control instruction sent by a detecting end, wherein
the first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition; and
the second control instruction is sent by the detecting end to the interruption-performing end in a process of continuing to transmit a data frame of the real-time service and after the detecting end detects that a current data frame level of the real-time service satisfies a preset interruption-triggering condition;
delaying(502), by the interruption-performing end upon receiving the first control instruction, interrupting the real-time service; and
interrupting(503), by the interruption-performing end upon receiving the second control instruction, the ongoing real-time service of the user equipment.

7. The method according to claim 6, wherein
the delaying, by the interruption-performing end upon receiving the first control instruction, interrupting the real-time service comprises: sending, by the interruption-performing end upon receiving the first control instruction, a delay-interrupt command to a base station BTS, so that the base station BTS delays interrupting the ongoing real-time service of the user equipment served by the base station BTS; and
the interrupting, by the interruption-performing end upon receiving the second control instruction, the ongoing real-time service of the user equipment comprises: sending, by the interruption-performing end upon receiving the second control instruction, an interrupt instruction to the base station BTS, so that the base station BTS interrupts the ongoing real-time service of the user equipment served by the base station BTS.

8. A detecting end for service interruption, wherein the detecting end comprising:
a handling module(11), configured to send a first control instruction to an interruption-performing end when data frame transmission of an ongoing real-time service of a user equipment needs to be interrupted and if it is detected that a data frame level of a data frame of the real-time service satisfies a preset interruption-delaying condition, so that the interruption-performing end, upon receiving the first control instruction, delays interrupting the real-time service; and
an interrupting module(12), configured to send a second control instruction to the interruption-performing end in a process of continuing to transmit a data frame of the real-time service and if it is detected that a current data frame level of the real-time service satisfies a preset interruption-triggering condition, so that the interruption-performing end, upon receiving the second control instruction, interrupts the real-time service.

9. The detecting end according to claim 8, wherein the data frame level of the data frame of the real-time service is classified at least into a first level and a second level; and whether the preset interruption-delaying condition is satisfied is determined according to whether the data frame level of the data frame of the real-time service is the first level or the second level.

10. The detecting end according to claim 9, wherein the handling module(11) comprises:
a detecting unit(111), configured to detect, in real time, the data frame level of the data frame of the ongoing real-time service of the user equipment;
a first determining unit(112), configured to determine whether the data frame transmission of the ongoing real-time service of the user equipment needs to be interrupted; and
a first handling unit(113), configured to send, when the data frame transmission of the ongoing real-time service of the user equipment needs to be interrupted, and if a data frame level of a current data frame is the first level or the real-time service has consecutively transmitted at least two data frames whose level is the first level, hence the preset interruption-delaying condition is satisfied, the first control instruction to the interruption-performing end.

11. The detecting end according to claim 9, wherein the handling module(11) comprises:
a second determining unit(114), configured to determine whether the ongoing real-time service of the user equipment needs to be interrupted;
an identifying unit(115), configured to detect, when the data frame transmission of the ongoing real-time service of the user equipment needs to be interrupted, a data frame level of a data frame transmitted by the ongoing real-time service of the user equipment; and
a second handling unit(116), configured to send, if the data frame level of the data frame transmitted by the ongoing real-time service is the preset first level, hence the preset interruption-delaying condition is satisfied, the first control instruction to the interruption-performing end.

12. The detecting end according to any one of claims 9 to 11, further comprising:
a first presetting module, configured to store a preset duration threshold; wherein
the interrupting module(12) is specifically configured to send, when it is detected that duration for continuing to transmit the data frame of the real-time service reaches the preset duration threshold, hence the interruption-triggering condition is satisfied, the second control instruction to the interruption-performing end.

13. An interruption-performing end for service interruption, wherein the interruption-performing end comprising:
a receiving module(21), configured to receive a first control instruction or a second control instruction sent by a detecting end;
wherein the first control instruction is sent by the detecting end to the interruption-performing end when data frame transmission of an ongoing real-time service of a user equipment needs to be interrupted and after the detecting end detects that a data frame level of a data frame of the real-time service satisfies a preset interruption-delaying condition; and
the second control instruction is sent by the detecting end to the interruption-performing end in a process of continuing to transmit a data frame of the real-time service and after the detecting end detects that a current data frame level of the real-time service satisfies a preset interruption-triggering condition; and
a handling module(22), configured to, upon receiving the first control instruction, delay interrupting the real-time service; and upon receiving the second control instruction, interrupt the ongoing real-time service of the user equipment.

14. The interruption-performing end according to claim 13, wherein:
the handling module(22) is specifically configured to, upon receiving the first control instruction, send a delay-interrupt command to a base station BTS, so that the base station BTS delays interrupting the ongoing real-time service of the user equipment served by the base station BTS; and
upon receiving the second control instruction, send an interrupt instruction to the base station BTS, so that the base station BTS interrupts the ongoing real-time service of the user equipment served by the base station BTS.

15. The interruption-performing end according to claim 13 or 14, wherein the interruption-performing end may be a base station or a base station controller; and the detecting end may be a base station BTS or a base station controller BSC.

## Patentansprüche

1. Verfahren zum Handhaben von Dienstunterbrechung, das folgende Schritte umfasst:
Senden (101), durch ein Detektionsende, einer ersten Steueranweisung an ein Unterbrechungsdurchführungsende, wenn die Datenrahmenübertragung eines fortlaufenden Echtzeitdienstes eines Anwendergeräts unterbrochen werden muss und falls das Detektionsende detektiert, dass ein Datenrahmenpegel eines Datenrahmens des Echtzeitdienstes eine voreingestellte Unterbrechungsverzögerungsbedingung erfüllt, so dass das Unterbrechungsdurchführungsende, beim Empfangen der ersten Steueranweisung, die Unterbrechung der Datenrahmenübertragung des Echtzeitdienstes verzögert; und
Senden (102), durch das Detektionsende, einer zweiten Steueranweisung an das Unterbrechungsdurchführungsende in einem Prozess des Weiterführens, um einen Datenrahmen des Echtzeitdienstes zu übertragen und falls das Detektionsende detektiert, dass ein aktueller Datenrahmenpegel des Echtzeitdienstes eine voreingestellte Unterbrechungsauslösebedingung erfüllt, so dass das Unterbrechungsdurchführungsende, beim Empfangen der zweiten Steueranweisung, den Echtzeitdienst unterbricht.

2. Verfahren nach Anspruch 1, wobei der Datenrahmenpegel des Datenrahmens des Echtzeitdienstes mindestens in einen ersten Pegel und einen zweiten Pegel eingestuft wird, und, ob die voreingestellte Unterbrechungsverzögerungsbedingung erfüllt ist, bestimmt wird gemäß, ob der Datenrahmenpegel des Datenrahmens des Echtzeitdienstes der erste Pegel oder der zweite Pegel ist.

3. Verfahren nach Anspruch 2, wobei das Senden, durch das Detektionsende, der ersten Steueranweisung an das Unterbrechungsdurchführungsende, wenn die Datenrahmenübertragung des fortlaufenden Echtzeitdienstes des Anwendergeräts unterbrochen werden muss und falls das Detektionsende detektiert, dass der Datenrahmenpegel des Datenrahmens des Echtzeitdienstes die voreingestellte Unterbrechungsverzögerungsbedingung erfüllt, folgende Schritte umfasst:
Detektieren, durch das Detektionsende in Echtzeit, des Datenrahmenpegels des Datenrahmens des fortlaufenden Echtzeitdienstes des Anwendergeräts; und
wenn die Datenrahmenübertragung des fortlaufenden Echtzeitdienstes des Anwendergeräts unterbrochen werden muss und falls ein Datenrahmenpegel eines aktuellen Datenrahmens der erste Pegel ist oder der Echtzeitdienst nachfolgend mindestens zwei Datenrahmen übertragen hat, deren Pegel der erste Pegel ist, womit die voreingestellte Unterbrechungsverzögerungsbedingung erfüllt ist, Senden, durch das Detektionsende, der ersten Steueranweisung an das Unterbrechungsdurchführungsende.

4. Verfahren nach Anspruch 2, wobei das Senden, durch das Detektionsende, der ersten Steueranweisung an das Unterbrechungsdurchführungsende, wenn die Datenrahmenübertragung des fortlaufenden Echtzeitdienstes des Anwendergeräts unterbrochen werden muss und falls das Detektionsende detektiert, dass der Datenrahmenpegel des Datenrahmens des Echtzeitdienstes die voreingestellte Unterbrechungsverzögerungsbedingung erfüllt, folgende Schritte umfasst:
Detektieren, durch das Detektionsende, wenn die Datenrahmenübertragung des fortlaufenden Echtzeitdienstes des Anwendergeräts unterbrochen werden muss, des Datenrahmenpegels des Datenrahmens, der von dem fortlaufenden Echtzeitdienst des Anwendergeräts übertragen wird; und
falls der Datenrahmenpegel des Datenrahmens, der von dem fortlaufenden Echtzeitdienst übertragen wird, der voreingestellte erste Pegel ist, womit die voreingestellte Unterbrechungsverzögerungsbedingung erfüllt ist, Senden, durch das Detektionsende, der ersten Steueranweisung an das Unterbrechungsdurchführungsende.

5. Verfahren nach einem der Ansprüche 2 bis 4, wobei vor dem Senden, durch das Detektionsende, der zweiten Steueranweisung an das Unterbrechungsdurchführungsende, das Verfahren ferner das Voreinstellen einer Dauerschwelle umfasst; und
das Senden, durch das Detektionsende, der zweiten Steueranweisung an das Unterbrechungsdurchführungsende in dem Prozess des Weiterführens, um den Datenrahmen des Echtzeitdienstes zu übertragen und falls das Detektionsende detektiert, dass der aktuelle Datenrahmenpegel des Echtzeitdienstes die voreingestellte Unterbrechungsauslösebedingung erfüllt, den folgenden Schritt umfasst:
wenn das Detektionsende detektiert, dass eine Dauer für das Weiterführen, um den Datenrahmen des Echtzeitdienstes zu übertragen, die voreingestellte Dauerschwelle erreicht, womit die Unterbrechungsauslösebedingung erfüllt ist, Senden, durch das Detektionsende, der zweiten Steueranweisung an das Unterbrechungsdurchführungsende.

6. Verfahren zum Handhaben von Dienstunterbrechung, wobei das Verfahren die folgenden Schritte umfasst:
Empfangen (501), durch ein Unterbrechungsdurchführungsende, einer ersten Steueranweisung oder einer zweiten Steueranweisung, die von einem Detektionsende gesendet wurden, wobei
die erste Steueranweisung von dem Detektionsende an das Unterbrechungsdurchführungsende gesendet wird, wenn die Datenrahmenübertragung eines fortlaufenden Echtzeitdienstes eines Anwendergeräts unterbrochen werden muss und nachdem das Detektionsende detektiert hat, dass ein Datenrahmenpegel eines Datenrahmens des Echtzeitdienstes eine voreingestellte Unterbrechungsverzögerungsbedingung erfüllt; und
die zweite Steueranweisung von dem Detektionsende an das Unterbrechungsdurchführungsende gesendet wird, in einem Prozess des Weiterführens, um einen Datenrahmen des Echtzeitdienstes zu übertragen und nachdem das Detektionsende detektiert hat, dass ein aktueller Datenrahmenpegel des Echtzeitdienstes eine voreingestellte Unterbrechungsauslösebedingung erfüllt;
Verzögern (502), durch das Unterbrechungsdurchführungsende beim Empfangen der ersten Steueranweisung, des Unterbrechens des Echtzeitdienstes; und
Unterbrechen (503), durch das Unterbrechungsdurchführungsende beim Empfangen der zweiten Steueranweisung, des fortlaufenden Echtzeitdienstes des Anwendergeräts.

7. Verfahren nach Anspruch 6, wobei
das Verzögern, durch das Unterbrechungsdurchführungsende beim Empfangen der ersten Steueranweisung, des Unterbrechens des Echtzeitdienstes den folgenden Schritt umfasst: Senden, durch das Unterbrechungsdurchführungsende beim Empfangen der ersten Steueranweisung, eines Verzögere-Unterbrechung-Befehls an eine Basisstation BTS, so dass die Basisstation BTS das Unterbrechen des fortlaufenden Echtzeitdienstes des Anwendergeräts, das von der Basisstation BTS bedient wird, verzögert; und
das Unterbrechen, durch das Unterbrechungsdurchführungsende beim Empfangen der zweiten Steueranweisung, des fortlaufenden Echtzeitdienstes des Anwendergeräts den folgenden Schritt umfasst: Senden, durch das Unterbrechungsdurchführungsende beim Empfangen der zweiten Steueranweisung, einer Unterbrechungsanweisung an die Basisstation BTS, so dass die Basisstation BTS den fortlaufenden Echtzeitdienst des Anwendergeräts, das von der Basisstation BTS bedient wird, unterbricht.

8. Detektionsende zur Dienstunterbrechung, wobei das Detektionsende Folgendes umfasst:
ein Handhabungsmodul (11), das ausgelegt ist zum Senden einer ersten Steueranweisung an ein Unterbrechungsdurchführungsende, wenn die Datenrahmenübertragung eines fortlaufenden Echtzeitdienstes eines Anwendergeräts unterbrochen werden muss und falls detektiert wird, dass ein Datenrahmenpegel eines Datenrahmens des Echtzeitdienstes eine voreingestellte Unterbrechungsverzögerungsbedingung erfüllt, so dass das Unterbrechungsdurchführungsende, beim Empfangen der ersten Steueranweisung, die Unterbrechung des Echtzeitdienstes verzögert; und
ein Unterbrechungsmodul (12), das ausgelegt ist zum Senden einer zweiten Steueranweisung an das Unterbrechungsdurchführungsende in einem Prozess des Weiterführens, um einen Datenrahmen des Echtzeitdienstes zu übertragen und falls detektiert wird, dass ein aktueller Datenrahmenpegel des Echtzeitdienstes eine voreingestellte Unterbrechungsauslösebedingung verfüllt, so dass das Unterbrechungsdurchführungsende, beim Empfangen der zweiten Steueranweisung, den Echtzeitdienst unterbricht.

9. Detektionsende nach Anspruch 8, wobei der Datenrahmenpegel des Datenrahmens des Echtzeitdienstes mindestens in einen ersten Pegel und einen zweiten Pegel eingestuft ist, und, ob die voreingestellte Unterbrechungsverzögerungsbedingung erfüllt ist, bestimmt wird gemäß, ob der Datenrahmenpegel des Datenrahmens des Echtzeitdienstes der erste Pegel oder der zweite Pegel ist.

10. Detektionsende nach Anspruch 9, wobei das Handhabungsmodul (11) Folgendes umfasst:
eine Detektionseinheit (111), die ausgelegt ist zum Detektieren, in Echtzeit, des Datenrahmenpegels des Datenrahmens des fortlaufenden Echtzeitdienstes des Anwendergeräts;
eine erste Bestimmungseinheit (112), die ausgelegt ist zum Bestimmen, ob die Datenrahmenübertragung des fortlaufenden Echtzeitdienstes des Anwendergeräts unterbrochen werden muss, und
eine erste Handhabungseinheit (113), die ausgelegt ist zum Senden, wenn die Datenrahmenübertragung des fortlaufenden Echtzeitdienstes des Anwendergeräts unterbrochen werden muss und falls ein Datenrahmenpegel eines aktuellen Datenrahmens der erste Pegel ist oder der Echtzeitdienst nachfolgend mindestens zwei Datenrahmen übertragen hat, deren Pegel der erste Pegel ist, womit die voreingestellte Unterbrechungsverzögerungsbedingung erfüllt ist, der ersten Steueranweisung an das Unterbrechungsdurchführungsende.

11. Detektionsende nach Anspruch 9, wobei das Handhabungsmodul (11) Folgendes umfasst:
eine zweite Bestimmungseinheit (114), die ausgelegt ist zum Bestimmen, ob der fortlaufende Echtzeitdienst des Anwendergeräts unterbrochen werden muss,
eine Identifiziereinheit (115), die ausgelegt ist zum Detektieren, wenn die Datenrahmenübertragung des fortlaufenden Echtzeitdienstes des Anwendergeräts unterbrochen werden muss, eines Datenrahmenpegels eines Datenrahmens, der von dem fortlaufenden Echtzeitdienst des Anwendergeräts übertragen wird; und
eine zweite Handhabungseinheit (116), die ausgelegt ist zum Senden, falls der Datenrahmenpegel des Datenrahmens, der von dem fortlaufenden Echtzeitdienst des Anwendergeräts übertragen wird, der voreingestellte erste Pegel ist, womit die voreingestellte Unterbrechungsverzögerungsbedingung erfüllt ist, der ersten Steueranweisung an das Unterbrechungsdurchführungsende.

12. Detektionsende nach einem der Ansprüche 9 bis 11, das ferner Folgendes umfasst:
ein erstes Voreinstellungsmodul, das ausgelegt ist zum Speichern einer voreingestellten Dauerschwelle; wobei
das Unterbrechungsmodul (12) speziell ausgelegt ist zum Senden, wenn detektiert wird, dass eine Dauer für das Weiterführen, um den Datenrahmen des Echtzeitdienstes zu übertragen, die voreingestellte Dauerschwelle erreicht, womit die Unterbrechungsauslösebedingung erfüllt ist, der zweiten Steueranweisung an das Unterbrechungsdurchführungsende.

13. Unterbrechungsdurchführungsende zur Dienstunterbrechung, wobei das Unterbrechungsdurchführungsende Folgendes umfasst:
ein Empfangsmodul (21), das ausgelegt ist zum Empfangen einer ersten Steueranweisung oder einer zweiten Steueranweisung, die von einem Detektionsende gesendet wurden;
wobei die erste Steueranweisung von dem Detektionsende an das Unterbrechungsdurchführungsende gesendet wird, wenn die Datenrahmenübertragung eines fortlaufenden Echtzeitdienstes eines Anwendergeräts unterbrochen werden muss und nachdem das Detektionsende detektiert hat, dass ein Datenrahmenpegel eines Datenrahmens des Echtzeitdienstes eine voreingestellte Unterbrechungsverzögerungsbedingung erfüllt; und
die zweite Steueranweisung von dem Detektionsende an das Unterbrechungsdurchführungsende gesendet wird, in einem Prozess des Weiterführens, um einen Datenrahmen des Echtzeitdienstes zu übertragen, und nachdem das Detektionsende detektiert hat, dass ein aktueller Datenrahmenpegel des Echtzeitdienstes eine voreingestellte Unterbrechungsauslösebedingung erfüllt; und
ein Handhabungsmodul (22), das ausgelegt ist zum Verzögern, beim Empfangen der ersten Steueranweisung, des Unterbrechens des Echtzeitdienstes; und zum Unterbrechen, beim Empfangen der zweiten Steueranweisung, des fortlaufenden Echtzeitdienstes des Anwendergeräts.

14. Unterbrechungsdurchführungsende nach Anspruch 13, wobei
das Handhabungsmodul (22) speziell ausgelegt ist zum
Senden, beim Empfangen der ersten Steueranweisung, eines Verzögere-Unterbrechung-Befehls an eine Basisstation BTS, so dass die Basisstation BTS das Unterbrechen des fortlaufenden Echtzeitdienstes des Anwendergeräts, das von der Basisstation BTS bedient wird, verzögert; und
Senden, beim Empfangen der zweiten Steueranweisung, einer Unterbrechungsanweisung an die Basisstation BTS, so dass die Basisstation BTS den fortlaufenden Echtzeitdienst des Anwendergeräts, das von der Basisstation BTS bedient wird, unterbricht.

15. Unterbrechungsdurchführungsende nach Anspruch 13 oder 14, wobei das Unterbrechungsdurchführungsende eine Basisstation oder eine Basisstationssteuerung sein kann und das Detektionsende eine Basisstation BTS oder eine Basisstationssteuerung BSC sein kann.

## Revendications

1. Procédé de traitement d'interruption de service, comprenant :
l'envoi (101), par une extrémité de détection, d'une première instruction de commande à une extrémité d'exécution d'interruption lorsqu'une transmission de trame de données d'un service entrant en temps réel d'un équipement utilisateur a besoin d'être interrompue et si l'extrémité de détection détecte qu'un niveau de trame de données d'une trame de données du service en temps réel satisfait à une condition de retardement d'interruption prédéfinie, de telle sorte que l'extrémité d'exécution d'interruption, lors de la réception de la première instruction de commande, retarde une interruption de la transmission de trame de données du service en temps réel ; et
l'envoi (102), par l'extrémité de détection, d'une deuxième instruction de commande à l'extrémité d'exécution d'interruption dans un processus de continuation de transmission d'une trame de données du service en temps réel et si l'extrémité de détection détecte qu'un niveau de trame de données courant du service en temps réel satisfait à une condition de déclenchement d'interruption prédéfinie, de telle sorte que l'extrémité d'exécution d'interruption, lors de la réception de la deuxième instruction de commande, interrompe le service en temps réel.

2. Procédé selon la revendication 1, dans lequel le niveau de trame de données de la trame de données du service en temps réel est classifié au moins en un premier niveau et un deuxième niveau ; et le fait que la condition de retardement d'interruption prédéfinie est ou non satisfaite est déterminé en fonction du fait que le niveau de trame de données de la trame de données du service en temps réel est le premier niveau ou le deuxième niveau.

3. Procédé selon la revendication 2, dans lequel l'envoi, par l'extrémité de détection, de la première instruction de commande à l'extrémité d'exécution d'interruption lorsque la transmission de trame de données du service entrant en temps réel de l'équipement utilisateur a besoin d'être interrompue et si l'extrémité de détection détecte que le niveau de trame de données de la trame de données du service en temps réel satisfait à la condition de retardement d'interruption prédéfinie comprend :
la détection, par l'extrémité de détection en temps réel, du niveau de trame de données de la trame de données du service entrant en temps réel de l'équipement utilisateur ; et
lorsque la transmission de trame de données du service entrant en temps réel de l'équipement utilisateur a besoin d'être interrompue, et si un niveau de trame de données d'une trame de données courante est le premier niveau ou si le service en temps réel a transmis de manière consécutive au moins deux trames de données dont le niveau est le premier niveau, et que la condition de retardement d'interruption prédéfinie est donc satisfaite, l'envoi, par l'extrémité de détection, de la première instruction de commande à l'extrémité d'exécution d'interruption.

4. Procédé selon la revendication 2, dans lequel l'envoi, par l'extrémité de détection, de la première instruction de commande à l'extrémité d'exécution d'interruption lorsque la transmission de trame de données du service entrant en temps réel de l'équipement utilisateur a besoin d'être interrompue et si l'extrémité de détection détecte que le niveau de trame de données de la trame de données du service en temps réel satisfait à la condition de retardement d'interruption prédéfinie comprend :
la détection, par l'extrémité de détection lorsque la transmission de trame de données du service entrant en temps réel de l'équipement utilisateur a besoin d'être interrompue, le niveau de trame de données de la trame de données transmise par le service entrant en temps réel de l'équipement utilisateur ; et
si le niveau de trame de données de la trame de données transmise par le service entrant en temps réel est le premier niveau prédéfini, et que la condition de retardement d'interruption prédéfinie est donc satisfaite, l'envoi, par l'extrémité de détection, de la première instruction de commande à l'extrémité d'exécution d'interruption.

5. Procédé selon l'une quelconque des revendications 2 à 4, dans lequel, avant l'envoi, par l'extrémité de détection, de la deuxième instruction de commande à l'extrémité d'exécution d'interruption, le procédé comprend en outre le préréglage d'un seuil de durée ; et
l'envoi, par l'extrémité de détection, de la deuxième instruction de commande à l'extrémité d'exécution d'interruption dans le processus de continuation de transmission de la trame de données du service en temps réel et si l'extrémité de détection détecte que le niveau de trame de données courant du service en temps réel satisfait à la condition de déclenchement d'interruption prédéfinie comprend :
lorsque l'extrémité de détection détecte que la durée de continuation de transmission de la trame de données du service en temps réel atteint le seuil de durée prédéfini, et que la condition de déclenchement d'interruption est donc satisfaite, l'envoi, par l'extrémité de détection, de la deuxième instruction de commande à l'extrémité d'exécution d'interruption.

6. Procédé de traitement d'interruption de service, dans lequel le procédé comprend :
la réception (501), par une extrémité d'exécution d'interruption, d'une première instruction de commande ou d'une deuxième instruction de commande envoyée par une extrémité de détection,
la première instruction de commande étant envoyée par l'extrémité de détection à l'extrémité d'exécution d'interruption lorsque la transmission de trame de données d'un service entrant en temps réel d'un équipement utilisateur a besoin d'être interrompue et après que l'extrémité de détection a détecté qu'un niveau de trame de données d'une trame de données du service en temps réel satisfait à une condition de retardement d'interruption prédéfinie ; et
la deuxième instruction de commande étant envoyée par l'extrémité de détection à l'extrémité d'exécution d'interruption dans un processus de continuation de transmission d'une trame de données du service en temps réel et après que l'extrémité de détection a détecté qu'un niveau de trame de données courant du service en temps réel satisfait à une condition de déclenchement d'interruption prédéfinie ;
le retardement (502), par l'extrémité d'exécution d'interruption lors de la réception de la première instruction de commande, de l'interruption du service en temps réel ; et
l'interruption (503), par l'extrémité d'exécution d'interruption lors de la réception de la deuxième instruction de commande, du service entrant en temps réel de l'équipement utilisateur.

7. Procédé selon la revendication 6, dans lequel
le retardement, par l'extrémité d'exécution d'interruption lors de la réception de la première instruction de commande, de l'interruption du service en temps réel comprend : l'envoi, par l'extrémité d'exécution d'interruption lors de la réception de la première instruction de commande, d'une commande de retardement d'interruption à une station de base BTS, de telle sorte que la station de base BTS retarde l'interruption du service entrant en temps réel de l'équipement utilisateur desservi par la station de base BTS ; et
l'interruption, par l'extrémité d'exécution d'interruption lors de la réception de la deuxième instruction de commande, du service entrant en temps réel de l'équipement utilisateur comprend : l'envoi, par l'extrémité d'exécution d'interruption lors de la réception de la deuxième instruction de commande, d'une instruction d'interruption à la station de base BTS, de telle sorte que la station de base BTS interrompe le service entrant en temps réel de l'équipement utilisateur desservi par la station de base BTS.

8. Extrémité de détection d'interruption de service, laquelle extrémité de détection comprend :
un module de traitement (11), configuré pour envoyer une première instruction de commande à une extrémité d'exécution d'interruption lorsque la transmission de trame de données d'un service entrant en temps réel d'un équipement utilisateur a besoin d'être interrompue et s'il est détecté qu'un niveau de trame de données d'une trame de données du service en temps réel satisfait à une condition de retardement d'interruption prédéfinie, de telle sorte que l'extrémité d'exécution d'interruption, lors de la réception de la première instruction de commande, retarde l'interruption du service en temps réel ; et
un module d'interruption (12), configuré pour envoyer une deuxième instruction de commande à l'extrémité d'exécution d'interruption dans un processus de continuation de transmission d'une trame de données du service en temps réel et s'il est détecté qu'un niveau de trame de données courant du service en temps réel satisfait à une condition de déclenchement d'interruption prédéfinie, de telle sorte que l'extrémité d'exécution d'interruption, lors de la réception de la deuxième instruction de commande, interrompe le service en temps réel.

9. Extrémité de détection selon la revendication 8, dans laquelle le niveau de trame de données de la trame de données du service en temps réel est classifié au moins en un premier niveau et un deuxième niveau ; et le fait que la condition de retardement d'interruption prédéfinie est ou non satisfaite est déterminé en fonction du fait que le niveau de trame de données de la trame de données du service en temps réel est le premier niveau ou le deuxième niveau.

10. Extrémité de détection selon la revendication 9, dans laquelle le module de traitement (11) comprend :
une unité de détection (111), configurée pour détecter, en temps réel, le niveau de trame de données de la trame de données du service entrant en temps réel de l'équipement utilisateur ;
une première unité de détermination (112), configurée pour déterminer si la transmission de trame de données du service entrant en temps réel de l'équipement utilisateur a besoin d'être interrompue ; et
une première unité de traitement (113), configurée pour envoyer, lorsque la transmission de trame de données du service entrant en temps réel de l'équipement utilisateur a besoin d'être interrompue, et si un niveau de trame de données d'une trame de données courante est le premier niveau ou si le service en temps réel a transmis consécutivement au moins deux trames de données dont le niveau est le premier niveau, et que la condition de retardement d'interruption prédéfinie est donc satisfaite, la première instruction de commande à l'extrémité d'exécution d'interruption.

11. Extrémité de détection selon la revendication 9, dans laquelle le module de traitement (11) comprend :
une deuxième unité de détermination (114), configurée pour déterminer si le service entrant en temps réel de l'équipement utilisateur a besoin d'être interrompu ;
une unité d'identification (115), configurée pour détecter, lorsque la transmission de trame de données du service entrant en temps réel de l'équipement utilisateur a été interrompue, un niveau de trame de données d'une trame de données transmise par le service entrant en temps réel de l'équipement utilisateur ; et
une deuxième unité de traitement (116), configurée pour envoyer, si le niveau de trame de données de la trame de données transmise par le service entrant en temps réel est le premier niveau prédéfini, et que la condition de retardement d'interruption prédéfinie est donc satisfaite, la première instruction de commande à l'extrémité d'exécution d'interruption.

12. Extrémité de détection selon l'une quelconque des revendications 9 à 11, comprenant en outre :
un premier module de préréglage, configuré pour stocker un seuil de durée prédéfini ; le module d'interruption (12) étant spécifiquement configuré pour envoyer, lorsqu'il est détecté que la durée de continuation de transmission de la trame de données du service en temps réel atteint le seuil de durée prédéfini, et que la condition de déclenchement d'interruption est donc satisfaite, la deuxième instruction de commande à l'extrémité d'exécution d'interruption.

13. Extrémité d'exécution d'interruption pour l'interruption de service, laquelle extrémité d'exécution d'interruption comprenant :
un module de réception (21), configuré pour recevoir une première instruction de commande ou une deuxième instruction de commande envoyée par une extrémité de détection ;
la première instruction de commande étant envoyée par l'extrémité de détection à l'extrémité d'exécution d'interruption lorsque la transmission de trame de données d'un service entrant en temps réel de l'équipement utilisateur a besoin d'être interrompue et après que l'extrémité de détection a détecté qu'un niveau de trame de données d'une trame de données du service en temps réel satisfait une condition de retardement d'interruption prédéfinie ; et
la deuxième instruction de commande étant envoyée par l'extrémité de détection à l'extrémité d'exécution d'interruption dans un processus de continuation de transmission d'une trame de données du service en temps réel et après que l'extrémité de détection a détecté qu'un niveau de trame de données courant du service en temps réel satisfait à une condition de déclenchement d'interruption prédéfinie ; et
un module de traitement (22), configuré pour, lors de la réception de la première instruction de commande, retarder une interruption du service en temps réel ; et lors de la réception de la deuxième instruction de commande, interrompre le service entrant en temps réel de l'équipement utilisateur.

14. Extrémité d'exécution d'interruption selon la revendication 13, dans laquelle :
le module de traitement (22) est spécifiquement configuré pour, lors de la réception de la première instruction de commande, envoyer une commande de retardement d'interruption à une station de base BTS, de telle sorte que la station de base BTS retarde l'interruption du service entrant en temps réel de l'équipement utilisateur desservi par la station de base BTS ; et
lors de la réception de la deuxième instruction de commande, envoyer une instruction d'interruption à la station de base BTS, de telle sorte que la station de base BTS interrompe le service entrant en temps réel de l'équipement utilisateur desservi par la station de base BTS.

15. Extrémité d'exécution d'interruption selon la revendication 13 ou 14, dans laquelle l'extrémité d'exécution d'interruption peut être une station de base ou un contrôleur de station de base ; et l'extrémité de détection peut être une station de base BTS ou un contrôleur de station de base BSC.
